(19) **Europäisches Patentamt / European Patent Office / Office européen des brevets**

(11) **EP 3 037 787 A1**

(12) **EUROPEAN PATENT APPLICATION**

(43) Date of publication:
**29.06.2016 Bulletin 2016/26**

(51) Int Cl.:
***G01D 5/347*** (2006.01)

(21) Application number: **15195524.2**

(22) Date of filing: **20.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.12.2014 JP 2014258847**

(71) Applicant: **Kabushiki Kaisha Yaskawa Denki Kitakyushu-shi, Fukuoka 806-0004 (JP)**

(72) Inventors:
 • **YOSHIDA, Yasushi**
   **Kitakyushu-shi, Fukuoka 806-0004 (JP)**

 • **KONDO, Hiroki**
   **Kitakyushu-shi, Fukuoka 806-0004 (JP)**
 • **HARADA, Masanobu**
   **Kitakyushu-shi, Fukuoka 806-0004 (JP)**
 • **MATSUTANI, Yasuhiro**
   **Kitakyushu-shi, Fukuoka 806-0004 (JP)**
 • **MUROKITA, Ikuma**
   **Kitakyushu-shi, Fukuoka 806-0004 (JP)**
 • **MURAOKA, Jiro**
   **Kitakyushu-shi, Fukuoka 806-0004 (JP)**

(74) Representative: **Viering, Jentschura & Partner mbB**
**Patent- und Rechtsanwälte**
**Grillparzerstraße 14**
**81675 München (DE)**

(54) **ENCODER AND MOTOR WITH ENCODER**

(57)    An encoder includes an absolute pattern, a light source, and a plurality of light reception elements. The absolute pattern is disposed in a measurement direction. The light source is configured to emit light to the absolute pattern. The plurality of light reception elements are arranged in the measurement direction and are configured to receive the light emitted from the light source and transmitted through or reflected by the absolute pattern. The plurality of light reception elements include a first light reception element having a shape asymmetrical in the measurement direction.

**FIG. 2**

**Description**

BACKGROUND

FIELD OF THE INVENTION

The present invention relates to an encoder and a motor with an encoder.

DISCUSSION OF THE BACKGROUND

Japanese Patent No. 4945674 discloses an encoder including an absolute light reception element group. The absolute light reception element group includes a plurality of light reception elements to individually detect optical signals from an absolute pattern. The absolute pattern uniquely indicates an absolute position of a rotary disk using a combination of positions of reflection slits within a predetermined angle.

The contents of Japanese Patent No. 4945674 are incorporated herein by reference in their entirety.

In order to improve detection accuracy of the encoder, there is a need for optimizing the apparatus configuration of the encoder.

Embodiments of the present disclosure have been made in view of the above-described circumstances. It is an object of the present disclosure to provide an encoder and a motor with an encoder that ensure improved detection accuracy.

SUMMARY

According to one aspect of the present disclosure, an encoder includes an absolute pattern, a light source, and a plurality of light reception elements. The absolute pattern is disposed in a measurement direction. The light source is configured to emit light to the absolute pattern. The plurality of light reception elements are arranged in the measurement direction and are configured to receive the light emitted from the light source and transmitted through or reflected by the absolute pattern. The plurality of light reception elements include a first light reception element having a shape asymmetrical in the measurement direction.

According to another aspect of the present disclosure, a motor includes the above-described encoder.

The embodiments improve the detection accuracy of the encoder.

BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:

FIG. 1 is a diagram illustrating an exemplary configuration of a servo system including an encoder according to an embodiment;
FIG. 2 is a diagram illustrating an exemplary configuration of the encoder;
FIG. 3 is a diagram illustrating an exemplary configuration of a disk of the encoder;
FIG. 4 is a diagram illustrating exemplary patterns of the disk;
FIG. 5 is a diagram illustrating an exemplary configuration of an optical module of the encoder;
FIG. 6 is a cross-sectional view of the disk and the optical module, taken along the line A-A in FIGs. 4 and 5, illustrating an example of light reception;
FIG. 7 illustrates an exemplary light intensity distribution of reflected light on a substrate of the optical module;
FIG. 8 is a diagram illustrating exemplary setting of a shape and dimensions of a light reception element on the optical module;
FIG. 9 is a diagram illustrating an exemplary change property of an analog detection signal in the case of a rectangular light reception element, without a pointed portion;
FIG. 10 is a diagram illustrating an exemplary change property of an analog detection signal in the case of a light reception element that includes a pointed portion and has a shape symmetrical in a measurement direction;
FIG. 11 is a graph illustrating an exemplary difference between the change properties of the amounts of light received by the light reception element without a pointed portion and the light reception element that includes the pointed portion and has the shape symmetrical in the measurement direction;
FIG. 12 illustrates an exemplary effect of using a light reception element having a shape asymmetrical in the measurement direction;
FIG. 13 illustrates an exemplary arrangement of a plurality of light reception elements according to a modification in which each of the light reception elements has a pointed portion on an edge in a width direction of each light reception element opposite to a light source;
FIG. 14 is a diagram illustrating an exemplary arrangement of a plurality of light reception elements according to a modification in which the light reception elements have identical light reception areas;
FIG. 15 is a diagram illustrating an exemplary arrangement of a plurality of light reception elements according to a modification in which portions of each light reception element on opposite sides in the measurement direction have identical light reception areas;
FIG. 16 is a diagram illustrating an exemplary shape of a light reception element that is asymmetrical in the measurement direction;
FIG. 17 is a diagram illustrating an exemplary shape of a light reception element that is asymmetrical in the measurement direction;

FIG. 18 is a diagram illustrating an exemplary shape of a light reception element that is asymmetrical in the measurement direction; and

FIG. 19 is a diagram illustrating an exemplary shape of a light reception element that is asymmetrical in the measurement direction.

## DESCRIPTION OF THE EMBODIMENTS

The embodiments will now be described with reference to the accompanying drawings, wherein like reference numerals designate corresponding or identical elements throughout the various drawings.

The encoders according to the following embodiments are applicable to various types of encoders, including rotary type encoders and linear type encoders. In the following description, a rotary type encoder will be taken as an example to facilitate understanding of the encoder. In other types of encoder applications, suitable modifications may be made, including replacing a measurement target in the rotary type encoder with a measurement target in the linear type encoder, that is, replacing a disk with a linear scale, which will not be elaborated herein.

### 1. Servo System

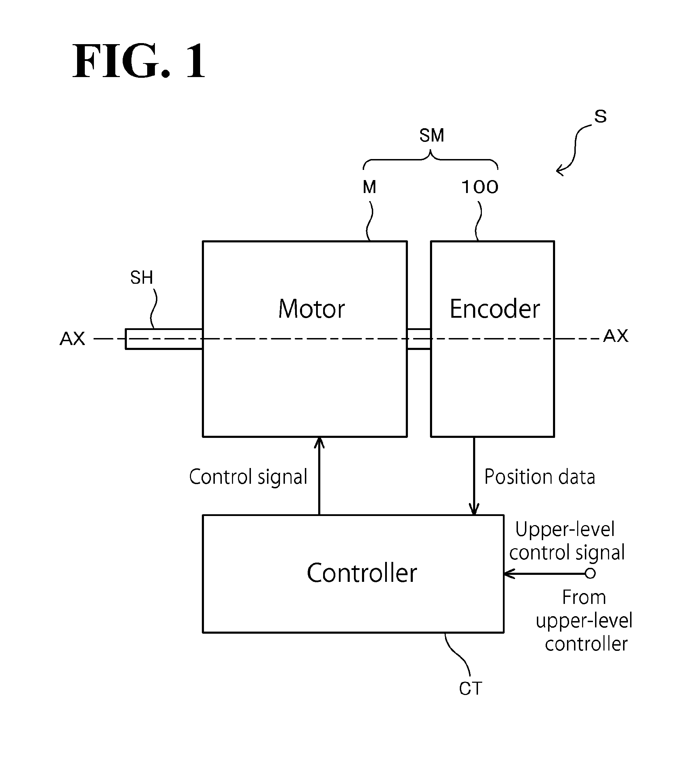

First, by referring to FIG. 1, a configuration of a servo system including an encoder according to this embodiment will be described. As illustrated in FIG. 1, a servo system S includes a servomotor SM and a controller CT. The servomotor SM includes an encoder 100 and a motor M.

The motor M is an exemplary motive power source without the encoder 100. The motor M is a rotary motor in which the rotor (not illustrated) rotates relative to the stator (not illustrated). A shaft SH is secured on the rotor and rotated about an axis AX to output rotational force.

Although the motor M alone is occasionally referred to as a servo motor, the servomotor SM as used in this embodiment refers to a configuration including the encoder 100. That is, the servomotor SM is an example of the motor with an encoder. For convenience of description, the following description is concerning such a servomotor that the motor with the encoder is controlled to follow a target value of a position, speed, or another parameter. It should be noted, however, that the motor with the encoder will not necessarily be limited to the servomotor. The motor with the encoder encompasses motors not used in servo systems, insofar as the encoder is provided. For example, the output from the encoder may be used for display purposes only.

There is no particular limitation to the motor M insofar as the encoder 100 is capable of detecting, for example, position data or other data. Also the motor M will not be limited to an electric motor, which utilizes electricity as power source. Examples of motors that use other power sources include hydraulic motors, pneumatic motors, and steam motors. In the following description, the motor M is an electric motor for convenience of description.

The motor M is coupled to the shaft SH on the opposite side of the motor M's output side of rotational force. This configuration, however, should not be construed in a limiting sense; the encoder 100 may be coupled to the shaft SH on the motor M's output side of rotational force. The encoder 100 detects the position of the shaft SH (rotor), thereby detecting the position of the motor M (which will be also referred to as rotational angle), and then outputs position data indicating the position. It is noted that the encoder 100 may not necessarily be coupled directly to the motor M. The encoder 100 may be coupled to the motor M through a mechanism such as a brake device, a reduction gear, and a rotation direction convertor.

Instead of or in addition to the position of the motor M, the encoder 100 may detect at least one of the speed (also referred to as "rotation speed" or "angular velocity") and the acceleration (also referred to as "rotational acceleration" or "angular acceleration") of the motor M. The speed and the acceleration of the motor M are detectable by exemplary processing such as first or second order time-differential of the position, and counting detection signals (such as an incremental signal, described later) for a predetermined period of time. In the following description, the physical amount detected by the encoder 100 is the position, for convenience of description.

The controller CT acquires position data output from the encoder 100, and controls the rotation of the motor M based on the position data. Thus, in this embodiment, in which the motor M is an electric motor, the controller CT controls current, voltage, or the like to be applied to the motor M based on the position data so as to control the rotation of the motor M. The controller CT may also acquire an upper level control signal from an upper level controller, not illustrated. In this case, the controller CT may control the motor M to output from the shaft SH of the motor M a rotational force with which the position or the like indicated by the upper level control signal is achievable. When the motor M is driven by another power source such as a hydraulic power source, a pneumatic power source, and a steam power source, the controller CT may control the supply from the power source to control the rotation of the motor M. 2. Encoder

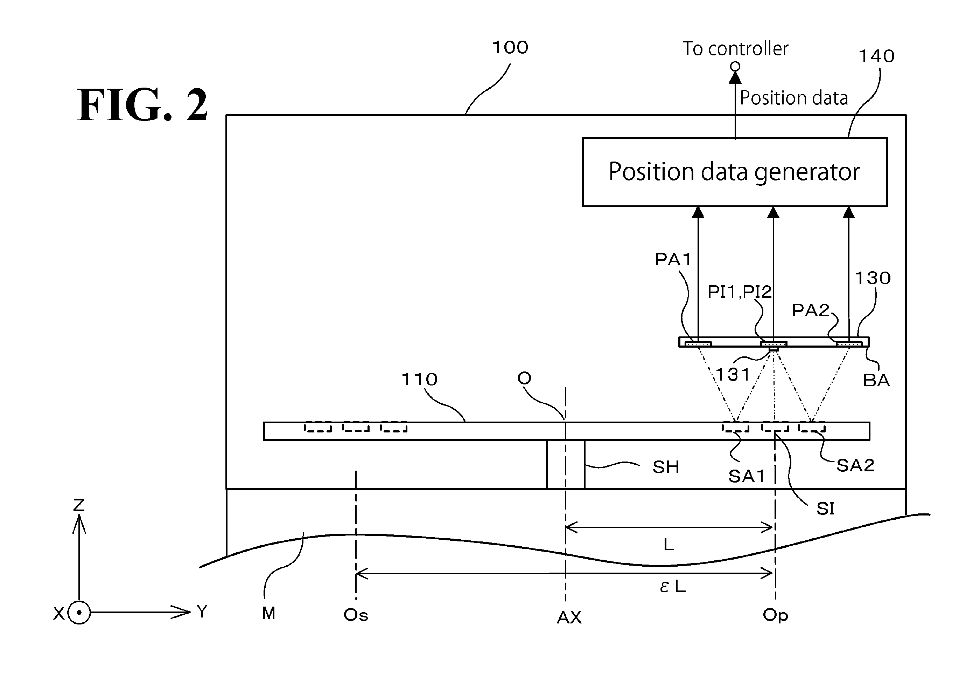

Next, the encoder 100 according to this embodiment will be described. As illustrated in FIG. 2, the encoder 100 includes a disk 110, an optical module 130, and a position data generator 140. The encoder 100 is what is called a reflective encoder, in which a light source 131 and light reception arrays PA1 and PA2 of the optical module 130 are on the same side relative to patterns SA1 and SA2 of the disk 110. The reflective encoder, however, should not be construed as limiting the encoder 100. Another possible embodiment is a transmission encoder, in which the light source 131 and the light reception arrays PA1 and PA2 are opposed to each other across the disk 110. For convenience of description, the encoder 100 is a reflection encoder in the following description.

For convenience of description of the encoder 100, the directions including the upper and downward directions are defined in the following manner and used as necessary. Referring to FIG. 2, The direction in which the disk 110 faces the optical module 130, that is, the positive direction in a Z axis direction is defined as "upward direction", while the negative direction in the Z axis direction is defined as "downward direction". It should be noted, however, that the directions including the upper and downward directions are subject to change in accordance with how the encoder 100 is installed. Hence, the definitions should not be construed as limiting the positional relationship of the components of the encoder 100.

2-1. Disk

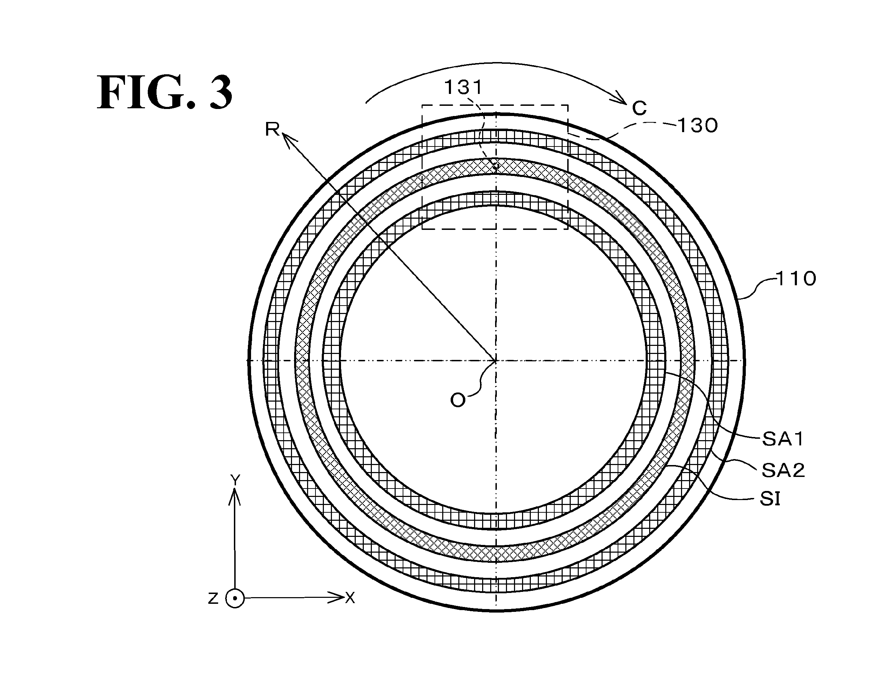

As illustrated in FIG. 3, the disk 110 has a circular plate shape with its disk center O approximately matching the axis AX. The disk 110 is coupled to the shaft SH of the motor M so that the disk 110 rotates together with the rotation of the shaft SH. In this embodiment, the disk 110 is taken as an example of the measurement target for measuring the rotation of the motor M. The measurement target may be any of other members than the disk 110, examples including an end surface of the shaft SH. While in the embodiment illustrated in FIG. 2 the disk 110 is directly coupled to the shaft SH, the disk 110 may alternatively be coupled to the shaft SH through a coupling member such as a hub.

As illustrated in FIG. 3, the disk 110 includes a plurality of patterns SA1, SA2, and SI. The disk 110 rotates together with the driving of the motor M, whereas the optical module 130 is fixed while facing part of the disk 110. Thus, together with the driving of the motor M, the patterns SA1, SA2, and SI and the optical module 130 move relative to each other in a measurement direction (which is the direction indicated by the arrow C in FIG. 3, and hereinafter occasionally referred to as "measurement direction C").

As used herein, the term "measurement direction" refers to a measurement direction in which the optical module 130 optically measures the patterns formed on the disk 110. In a rotary type encoder in which the measurement target is a disk, as in the rotary type encoder 100 with the disk 110 according to this embodiment, the measurement direction matches the circumferential direction around the center axis of the disk 110. Another example is a linear type encoder, in which the measurement target is a linear scale and a rotor moves relative to a stator. In this case, the measurement direction is a direction along the linear scale.

2-2. Optical Detection Mechanism

The patterns SA1, SA2, and SI, the optical module 130, and other elements constitute an optical detection mechanism.

2-2-1. Patterns

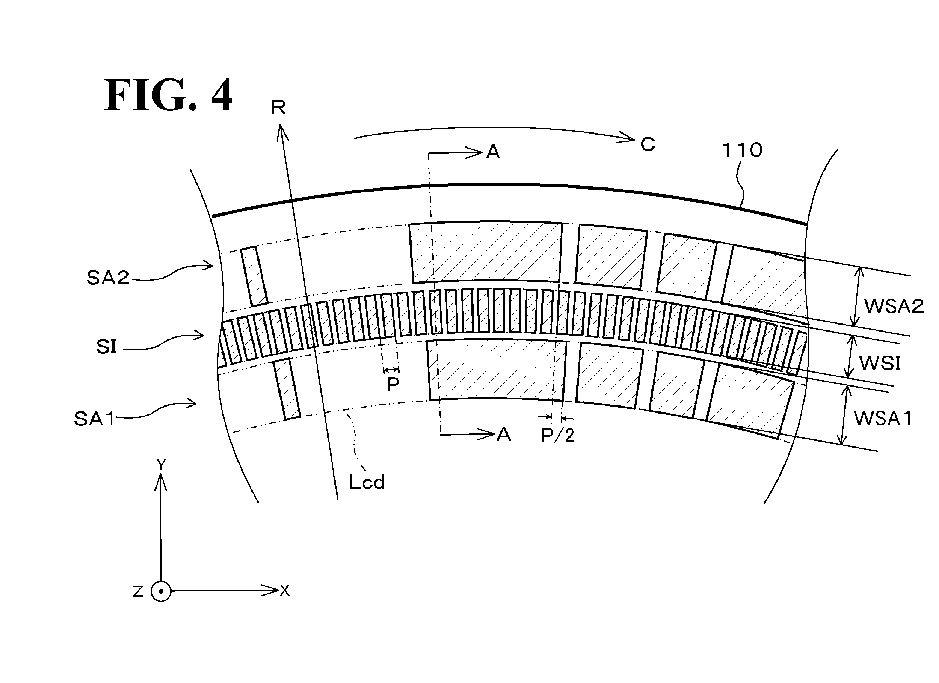

Each of the patterns is a track in the form of a ring disposed around the disk center O on the upper surface of the disk 110. Each pattern includes a plurality of reflection slits (hatched with slanted lines in FIG. 4) arranged throughout the track in the measurement direction C. Each of the reflection slits reflects light emitted from a light source 131.

The disk 110 is made of a light reflecting material such as metal. For a non-light-reflecting portion of the surface of the disk 110, a material of low reflectance (for example, chromic oxide) is disposed by a method such as application. Thus, the reflection slits are formed at other portions than where the low reflectance material is. It is also possible to form the reflection slits by making the non-light-reflecting portion a coarse surface by sputtering or a similar method to ensure low reflectance.

There is no particular limitation to the material of the disk 110 and the method of preparing the disk 110. An exemplary material of the disk 110 is a light transmitting material such as glass and transparent resin. In this case, the reflection slits may be formed by mounting a light reflecting material (such as aluminum) on the surface of the disk 110 by deposition or another method.

When the encoder 100 is the above-mentioned transmission encoder, each pattern formed on the disk 110 includes a plurality of transmission slits throughout the track in the measurement direction C. Each of the transmission slits transmits light emitted from the light source 131.

Three patterns are disposed next to each other on the upper surface of the disk 110 in a width direction (direction indicated by the arrow R in FIG. 3, and hereinafter occasionally referred to as "width direction R"). The term "width direction" refers to a radial direction of the disk 110, which is a direction approximately perpendicular to the measurement direction C. The dimension of each pattern in the width direction R corresponds to the width of each pattern. The three patterns are coaxial and arranged in the order: SA1, SI, SA2 in the width direction R. Each pattern will be described in more detail by referring to FIG. 4, which is a partially enlarged view of an area of the disk 110 facing the optical module 130.

2-2-1-1. Absolute Pattern

As illustrated in FIG. 4, the pattern SA1 includes a plurality of reflection slits arranged throughout the circumference of the disk 110 in an absolute pattern in the measurement direction C. Similarly, the pattern SA2 includes a plurality of reflection slits arranged throughout the circumference of the disk 110 in an absolute pattern in the measurement direction *C*. The patterns SA1 and SA2 are examples of the absolute pattern.

The term "absolute pattern" refers to a pattern in which the position, ratio, or another parameter of the reflection slits within the angle at which the optical module 130, described later, is opposed to the light reception arrays is uniquely determined on the circumference of the disk 110. In the exemplary absolute pattern illustrated in FIG. 4, where the motor M is at one angular position, a plurality of light reception elements of the opposing light reception array form a combination of bit patterns indicating detection or undetection, and the combination uniquely indicates the absolute position representing the angular position. The term "absolute position" refers to an angular position relative to an origin of the disk 110 on the circumference of the disk 110. The origin is set at a convenient angular position on the circumference of the disk 110, and the absolute pattern is formed based on the origin.

This exemplary pattern ensures generation of a pattern that one-dimensionally indicates the absolute position of the motor M using bits corresponding to the number of the light-receiving elements of the light-receiving array. This configuration, however, should not be construed as limiting the absolute pattern. For example, it is possible to use a pattern that multi-dimensionally indicates the absolute position using bits corresponding to the number of the light-receiving elements. It is also possible to use various other patterns than the predetermined bit pattern; examples include a pattern in which a physical quantity such as the amount or the phase of the light received by the light reception elements changes to uniquely indicate the absolute position, and a pattern in which a code sequence of the absolute pattern is modulated.

In this embodiment, two patterns SA1 and SA2 are formed in similar absolute patterns, and the absolute patterns are offset from each other by a length of 1/2 bit in the measurement direction *C*. This offset amount corresponds to, for example, half a pitch *P* of the reflection slit of the pattern SI. If the patterns SA1 and SA2 are not offset from each other in the case of using one-dimensional absolute pattern to indicate the absolute position as in this embodiment, the following may occur. When the light reception elements of the light reception arrays PA1 and PA2 face the edges of the reflection slits or face a vicinity of the edges of the reflection slits, an area of bit pattern transition occurs. In the area of bit pattern transition, the accuracy of detecting the absolute position may degrade. In view of this, the patterns SA1 and SA2 are offset from each other in this embodiment. For example, when the absolute position to be obtained through the pattern SA1 is based on the area of bit pattern transition, a detection signal obtained through the pattern SA2 is used to calculate the absolute position. Inversely, when the absolute position to be obtained through the pattern SA2 is based on the area of bit pattern transition, a detection signal obtained through the pattern SA1 is used to calculate the absolute position. This improves accuracy of detecting the absolute position. This configuration necessitates uniformity of the amounts of light received by the light reception arrays PA1 and PA2. Still, this configuration is realized in this embodiment by arranging the light reception array PA1 and the light source 131 approximately at the same distance from the light source 131.

Instead of the absolute patterns of the patterns SA1 and SA2 being offset from each other, the light reception arrays PA1 and PA2, which respectively correspond to the patterns SA1 and SA2, may be offset from each other.

The number of the absolute patterns should not be limited to two; it is also possible to use one absolute pattern. For convenience of description, the two patterns SA1 and SA2 are formed in the following description.

2-2-1-2. Incremental Pattern

In contrast, the pattern SI includes a plurality of reflection slits arranged throughout the circumference of the disk 110 in an incremental pattern in the measurement direction *C*.

The term "incremental pattern" refers to a pattern of regular repetition of slits at a predetermined pitch, as illustrated in FIG. 4. The term "pitch" refers to an arrangement interval of two adjacent reflection slits of the pattern SI, which has the incremental pattern. As illustrated in FIG. 4, the pattern SI has a pitch of *P*. The incremental pattern is different from the absolute pattern, which indicates the absolute position using bits each indicating whether each of the plurality of light reception elements has detected light or not. Instead, the incremental pattern uses a sum of detection signals obtained by one or more light reception elements to indicate a position of the motor M on a one-pitch basis or within one pitch. Thus, even though the incremental pattern does not indicate the absolute position of the motor M, the incremental pattern ensures much higher accuracy of indicating the position of the motor M than the accuracy realized by the absolute pattern.

In this embodiment, the reflection slits of the patterns SA1 and SA2 each have a minimal length in the measurement direction *C* that is substantially identical to the pitch *P* of the reflection slits of the pattern SI. As a result, the absolute signals based on the patterns SA1 and SA2 each have a resolution that substantially matches the number of the reflection slits of the pattern SI. This configuration, however, should not be construed as limiting the minimal length of the reflection slits of the patterns SA1 and SA2. The number of the reflection slits of the pattern SI is preferably equal to or greater than the resolution of each absolute signal.

2-2-2. Optical Module

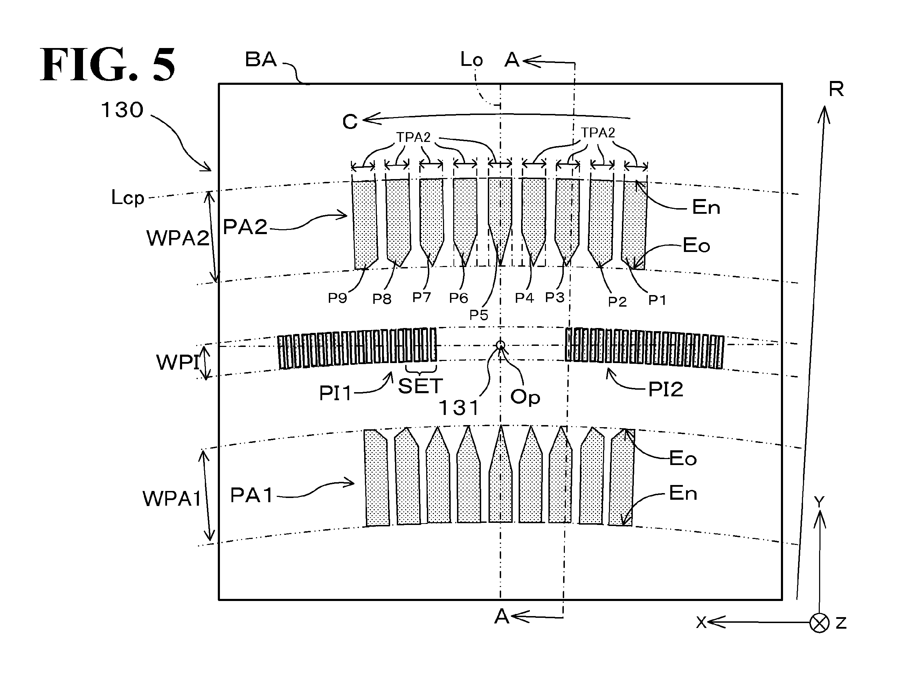

As illustrated in FIGs. 2 and 5, the optical module 130 is a single substrate BA, which is parallel to the disk 110. This ensures a thin encoder 100 and facilitates the production of the optical module 130. Together with the rotation of the disk 110, the optical module 130 moves in the measurement direction *C* relative to the patterns SA1, SA2, and SI. The optical module 130 may not necessarily have a form of a single substrate BA; the components of the optical module 130 may be a plurality of substrates insofar as these substrates are concentrated together. Alternatively, the optical module 130 may have other than a form of a substrate.

As illustrated in FIGs. 2 and 5, on the surface of the substrate BA facing the disk 110, the optical module 130 includes the light source 131, and includes the plurality of light reception arrays PA1, PA2, PI1, and PI2.

2-2-2-1. Light Source

As illustrated in FIG. 3, the light source 131 is a position facing the pattern SI. When the three patterns SA1, SA2, and SI pass through a position facing the optical module 130, the light source 131 emits light to the portions of the three patterns SA1, SA2, and SI that face the optical module 130.

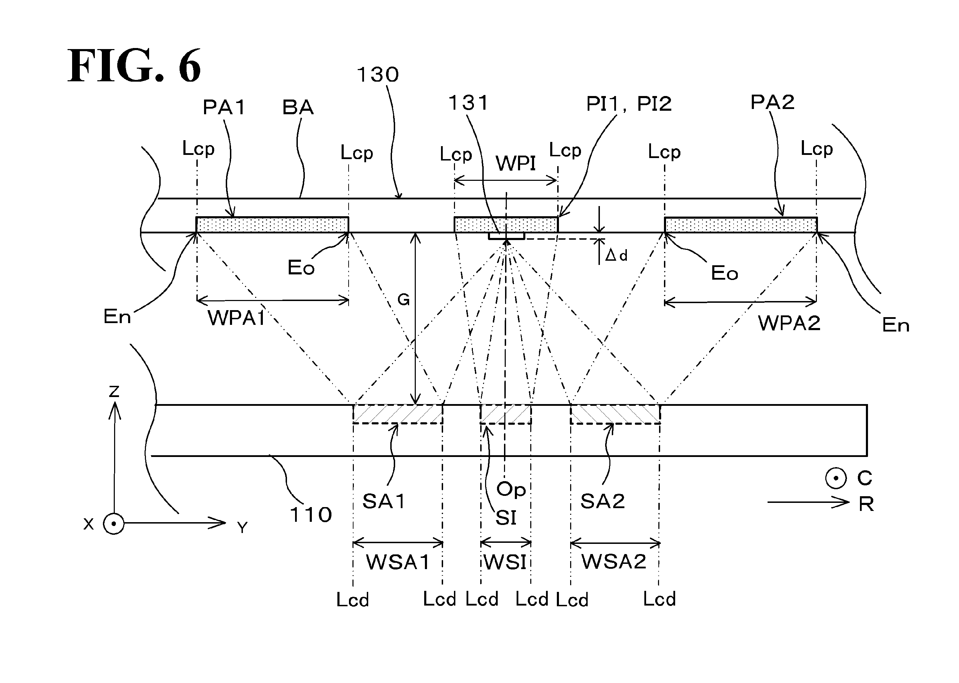

There is no particular limitation to the light source 131 insofar as the light source 131 is capable of emitting light to the area intended to be irradiated. A non-limiting example of the light source 131 is a light emitting diode (LED). As illustrated in FIG. 6, the light source 131 is formed as a point light source, where no optical lens or like element is particularly disposed, and emits diffused light from a light emitting portion. By the term "point light source", it is not necessarily meant to be an accurate point. It will be appreciated that light can be emitted from a finite emission surface of a light source insofar as the light source is capable of emitting diffused light from an approximately pointed position in design viewpoints or in operation principle viewpoints. The term "diffused light" may not necessarily be light that can be emitted in every direction from the point light source. The diffused light encompasses light emitted and diffused in a limited direction. That is, the diffused light encompasses any light that is more diffusible than parallel light. The use of a point light source in this manner ensures that the light source 131 uniformly emits light to the three patterns SA1, SA2, and SI when the three patterns SA1, SA2, and SI are passing through the position facing the light source 131. Additionally, neither concentration nor diffusion of light is performed by an optical element. This configuration eliminates or minimizes an error caused by the optical element, and increases straightness of the light toward the patterns.

2-2-2-2. Enlargement Ratio of Projected Images

The plurality of light reception arrays are disposed around the light source 131 and respectively correspond to the patterns. Each of the plurality of light reception arrays includes a plurality of light reception elements (dotted portions in FIG. 5) that receive light reflected by the reflection slits of a corresponding pattern. As illustrated in FIG. 5, the plurality of light reception elements are aligned in the measurement direction C.

As illustrated in FIG. 6, the light source 131 emits diffused light. Thus, an image of the patterns projected on the optical module 130 is enlarged by a predetermined enlargement ratio, $\varepsilon$, that depends on the optical path length. As illustrated in FIGs. 4 to 6, assume that the patterns SA1, SA2, and SI respectively have lengths *WSA1*, *WSA2*, and *WSI* in the width direction *R*, and that reflections of the light reflected by the patterns SA1, SA2, and SI respectively have lengths *WPA1*, *WPA2,* and *WPI* in the width direction *R* when the reflections are projected on the optical module 130. Under the assumption, *WPA1*, *WPA2*, and *WPI* are respectively $\varepsilon$ times *WSA1*, *WSA2*, and *WSI*. In this embodiment, as illustrated in FIGs. 5 and 6, the length of each light reception element of each light reception array in the width direction *R* is substantially equal to the length in the width direction *R* of the shape of the projection of each slit on the optical module 130. This configuration, however, should not be construed as limiting the length of each light reception element in the width direction *R.*

Similarly, the optical module 130 in the measurement direction *C* is affected by the enlargement ratio $\varepsilon$, that is, the disk 110 in the measurement direction *C* as enlarged by the enlargement ration $\varepsilon$ is projected on the optical module 130. This will be described in more detail below by referring to the optical module 130 in the measurement direction *C* with the light source 131 located at the position illustrated in FIG. 2, for ease of description. The disk 110 as viewed in the measurement direction *C* forms a circle centered around the shaft core AX. When, in contrast, this circle is projected on the optical module 130, the center of the circle projected on the optical module 130 is at a distance $\varepsilon L$ from an optical center Op, which is a position on the surface of the disk 110 corresponding to the light source 131. Distance *L* denotes the distance between the shaft core AX and the optical center Op, and distance $\varepsilon L$ denotes the distance *L* enlarged by the enlargement ratio $\varepsilon$. In FIG. 2, the center of the circle projected on the optical module 130 is indicated by Os, which is referred to as measurement center. Thus, the circle projected on the optical module 130 defines a line that has a radius of $\varepsilon L$ and that is centered around the measurement center Os, which is on an imaginary line crossing the optical center Op and the shaft core AX and which is spaced apart from the optical center Op toward the shaft core AX by the distance $\varepsilon L$.

As illustrated in FIGs. 4 to 6, circular arc lines Lcd and Lcp indicate correspondence between the length of the disk 110 in the measurement direction *C* and the length of optical module 130 in the measurement direction *C*. As illustrated in FIG. 4 and other drawings, the line Lcd is along the measurement direction *C* on the disk 110. As illustrated in FIG. 5 and other drawings, the line Lcp is along the measurement direction *C* on the substrate BA (the line Lcp is the line Lcd projected on the optical module 130).

As illustrated in FIG. 6, *G* denotes the length of the gap between the optical module 130 and the disk 110, and *Δd* denotes the amount by which the light source 131 protrudes from the substrate BA. Here, the enlargement ration ε is represented by the following Formula (1).

[Formula 1]

$$\varepsilon = (2G - \Delta d) / (G - \Delta d)$$

2-2-2-3. Absolute and Incremental Light Reception Arrays

A non-limiting example of the individual light reception element is a photodiode. Each light reception element has a shape having its own predetermined light reception area, and outputs an analog detection signal having a magnitude in accordance with the total amount of light received using the entire light reception area (hereinafter referred to as "amount of light reception"). The photodiode should not be construed as limiting the individual light reception element. There is no particular limitation to the light reception element insofar as the light reception element is capable of receiving light emitted from the light source 131 and converting the received light into an electrical signal.

The light reception arrays according to this embodiment are disposed such that the light reception arrays respectively correspond to the three patterns SA1, SA2, and SI. Specifically, the light reception array PA1 receives light reflected by the pattern SA1, and the light reception array PA2 receives light reflected by the pattern SA2. The light reception arrays PI1 and PI2 receive light reflected by the pattern SI. The light reception array PI1 and the light reception array PI2 are separate from each other, with a gap between the light reception array PI1 and the light reception array PI2. Still, the light reception array PI1 and the light reception array PI2 correspond to the same track. Thus, the number of light reception arrays corresponding to one pattern may not necessarily be one; a plurality of light reception arrays may correspond to one pattern.

The light source 131 and the light reception arrays PA1 and PA2 are arranged in the manner illustrated in FIG. 5. Specifically, one set of the light reception array PA1 and one set of the light reception array PA2, which respectively correspond to the absolute patterns, are disposed at positions parallel to each other and offset from each other with the light source 131 between the light reception arrays PA1 and PA2 in the width direction *R*. In this embodiment, the light reception array PA1 is disposed further inward than the light reception array PA2, while the light reception array PA2 is disposed further outward than the light reception array PA1. The light reception arrays PA1 and PA2 are at an approximately equal distance from the light source 131. Each of the light reception arrays PA1 and PA2 has a shape line-symmetrical about a line Lo, which passes through the light source 131 (optical center Op) and which is parallel to the Y axis. The plurality of (nine in this embodiment) light reception elements of the light reception array PA1 are aligned in the measurement direction C (line Lcp) at constant pitches, and the plurality of light reception elements of the light reception array PA2 are aligned in the measurement direction *C* (line Lcp) at constant pitches. Shapes of the plurality of light reception elements will be described later.

In this embodiment, the absolute patterns are one-dimensional, and each of the light reception arrays PA1 and PA2, which correspond to the one-dimensional patterns, includes a plurality of light reception elements (nine light reception elements in this embodiment). The plurality of light reception elements are aligned in the measurement direction C (line Lcp) to receive light reflected by the reflection slits of the pattern SA1 or SA2 corresponding to the plurality of light reception elements. As described above, each individual reception or non-reception of light is indicated by a bit, and the absolute position is indicated by nine bits. The light reception signals received by the plurality of light reception elements are processed independently of each other in the position data generator 140 (see FIG. 2), and then the absolute position coded into a serial bit pattern is decoded using a combination of the light reception signals. These light reception signals obtained from the light reception arrays PA1 and PA2 are each referred to as "absolute signal". When some other absolute patterns than the absolute patterns used in this embodiment are used, the light reception arrays PA1 and PA2 respectively would have configurations corresponding to the some other absolute patterns. It is noted that the number of the light reception elements of the light reception arrays PA1 and PA2 may be other than nine, and that the number of bits of the absolute signals will not be limited to nine.

The light source 131 and the light reception arrays PI1 and PI2 are arranged in the manner illustrated in FIG. 5. Specifically, the light reception arrays PI1 and PI2, which respectively correspond to the incremental patterns, are aligned with each other across the light source 131 in the measurement direction *C*. More specifically, the light reception arrays PI1 and PI2 are line-symmetrical about the line Lo. The light source 131 is interposed between the light reception arrays PI1 and PI2, which constitute one track in the measurement direction *C*.

The light reception arrays PI1 and PI2 include a plurality of light reception elements aligned in the measurement direction *C* (line Lcp) to receive light reflected by the reflection slits of the pattern SI, which correspond to the light reception arrays PI1 and PI2. These light reception elements have approximately identical shapes (approximately rectangular shapes in this embodiment).

In this embodiment, a set of four light reception elements (indicated "SET" in FIG. 5) is provided in one pitch of the incremental pattern of the pattern SI (the one pitch used here is one pitch that is projected on the optical module 130, that is, $\varepsilon \times P$). Similarly, a plurality of additional sets of four light reception elements are aligned in the measurement direction *C*. In the incremental pattern, the reflection slits are repeatedly formed on a one-pitch basis. Through rotation of the disk 110, the light reception elements generate periodic signals that constitute one period (referred to as 360° in electrical angle). Since four light reception elements constitute one set corresponding to one pitch, adjacent two light reception elements among the four light reception elements output periodic signals that are incremental phase signals and that are phase-shifted relative to each other by 90°. The incremental phase signals will be respectively referred to as an A+ phase signal, a B+ phase signal (which is a signal phase-shifted relative to the A+ phase signal by 90°), an A- phase signal (which is a signal phase-shifted relative to the A+ phase signal by 180°), and a B- phase signal (which is a signal phase-shifted relative to the B+ phase signal by 180°).

The incremental pattern indicates the position of the motor M in one pitch. The four signals of different phases in one set respectively correspond to four signals of different phases in another set. That is, the value of one signal of a phase changes in a similar manner to the value of the corresponding signal of the same phase in the another set. Thus, the signals of the same phases are added together throughout the plurality of sets. Hence, four signals that are phase-shifted relative to each other by 90° are detected from the plurality of light reception elements of the light reception array PI illustrated in FIG. 5. That is, four signals phase-shifted relative to each other by 90° are output from each of the light reception arrays PI1 and PI2. These four signals will be referred to as "incremental signals".

In this embodiment, four light reception elements are accommodated in one set corresponding to one pitch of the incremental pattern, and the light reception array PI1 and the light reception array PI2 are sets of similar configurations. This configuration, however, should not be construed as limiting the number of the light reception elements to be accommodated in one set. Another possible embodiment is that two light reception elements are accommodated in one set. The total number of the light reception elements in the light reception arrays PI1 and PI2 should not be limited to the example illustrated in FIG. 5 and other drawings. The light reception arrays PI1 and PI2 may acquire different-phase light reception signals.

The light reception arrays corresponding to the incremental patterns should not be limited to the configuration in which the two light reception arrays PI1 and PI2 are aligned with each other across the light source 131. Another possible embodiment is that the light reception arrays form a single light reception array in the measurement direction *C* on the outer peripheral side or the inner peripheral side of the light source 131. Still another possible embodiment is to form incremental patterns having mutually different resolutions on a plurality of tracks of the disk 110, and to provide a plurality of light reception arrays corresponding to the respective tracks.

The light reception arrays have been outlined in the above description. Next, the position data generator 140, which is the remaining element of the configuration, will be described. Then, shapes and other properties of the light reception elements of the light reception arrays PA1 and PA2 will be described.

2-3. Position Data Generator

The position data generator 140 acquires signals from the optical module 130 at the timing of measuring the absolute position of the motor M. The signals include two absolute signals each including a bit pattern representing a first absolute position, and high-incremental signals including four incremental signals that are phase-shifted relative to each other by 90°. Based on the signals, the position data generator 140 calculates a second absolute position of the motor M represented by the signals, and outputs position data indicating the calculated second absolute position to the controller CT.

There is no particular limitation to how the position data generator 140 should generate the position data; any of various other methods is possible. In this embodiment, the position data generator 140 generates the position data by calculating the absolute position based on the incremental signal and the absolute signal.

The position data generator 140 binarizes the absolute signals from the light reception arrays PA1 and PA2 and converts the binary representations into bit data that indicates the absolute position. Based on a predetermined relationship of correspondence between predetermined bit data and absolute positions, the position data generator 140 specifies the first absolute position. That is, the "first absolute position", as used herein, is an absolute position having a low resolution before superimposition of the incremental signals. Among the incremental signals of four phases from the light reception arrays PI1 and PI2, the position data generator 140 performs subtraction between the incremental signals having 180° phase difference. The subtraction between each pair of two incremental signals having 180° phase difference cancels out a production error, a measurement error, and other possible errors associated with the reflection slits in one pitch. The signals resulting from the subtraction will be referred to as "first incremental signal" and "second incremental signal". The first incremental signal and the second incremental signal have 90° phase difference in electrical angle with respect to each other (these signals will be simply referred to as "A-phase signal" and "B-phase signal"). Based on these two signals, the position data generator 140 identifies the position of the motor M in one pitch. There is no particular limitation to the method of identifying the position of the motor M in one pitch. An exemplary method in a case where the incremental signal (periodic signal) is a sinusoidal signal is to perform division between the two, A-phase and B-phase sinusoidal signals and to perform an arctan operation of the quotient so as to calculate electrical angle $\phi$. Another exemplary method is to convert the two sinusoidal signals into electrical angle $\phi$ using a tracking circuit. Still another exemplary method is to use a predetermined table from which to identify an electrical angle $\phi$ associated with the values of the A-phase and B-phase signals. In this respect, the position data generator 140 preferably performs analogue-digital conversion of the two, A-phase and B-phase sinusoidal signals in every detection signal.

The position data generator 140 superimposes the position in one pitch identified based on the incremental signals over the first absolute position identified based on the absolute signals. This ensures calculation of a second absolute position with a resolution higher than the resolution of the first absolute position, which is based on the absolute signals. Then, the position data generator 140 multiplies the calculated second absolute position to further improve the resolution so as to generate position data indicating a more highly accurate absolute position. Then, the position data generator 140 outputs the position data to the controller CT.

2-4. Shapes of Light Reception Elements of Absolute Light Reception Arrays

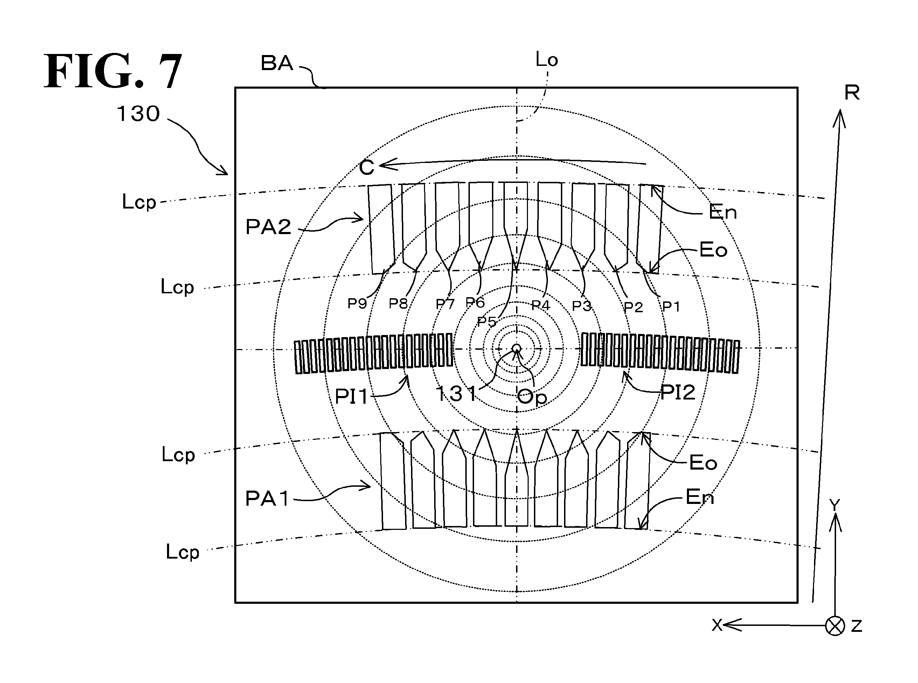

Next, shapes of the light reception elements of the light reception arrays PA1 and PA2 will be described.
Assume that diffused light emitted from the light source 131 is entirely reflected by the surface of the disk 110, and the substrate BA of the optical module 130 is irradiated with the reflected light. In this case, the intensity of the reflected light exhibits a concentric distribution as illustrated in FIG. 7. Specifically, the intensity attenuates as the distance from the optical center Op increases. The dotted circles in FIG. 7 indicate equi-intensity lines of the reflected light, among which inner peripheral circles indicate higher intensity and outer peripheral circles indicate lower intensity. This concentric distribution of intensity of the reflected light is because light has a property to attenuate in proportion to the optical path length while the reflected light from the light source 131 is received on the flat substrate BA, which is perpendicular to the optical axis in irradiation space (reflection space) of the diffused light. It is the areas on the substrate BA corresponding to the patterns SA1, SA2, and SI of the disk 110 that are actually irradiated with the reflected light.
As described above, in each of the absolute light reception arrays PA1 and PA2, the plurality of light reception elements are arranged along the arcuate lines Lcp, which have their center of curvature at the measurement center Os. The optical center Op is far from the measurement center Os. This configuration makes the light intensities of the light reception elements of the light reception arrays PA1 and PA2 vary in accordance with the distance from the light source 131 in the measurement direction $C$. Specifically, in the light reception array PA2, which has a line-symmetrical shape about the line Lo as described above, the light intensity in a light reception element P5, which is on the line Lo, is highest. The light intensity then decreases as the distance to the line Lo decreases, that is, the light intensity decreases in the order: the line-symmetrical pair of light reception elements P4 and P6, the line-symmetrical pair of light reception elements P3 and P7, the line-symmetrical pair of light reception elements P2 and P8, and the line-symmetrical pair of light reception elements P1 and P9. The same applies to the light reception array PA1. Since the light reception array PA1 and the light reception array PA2 are approximately parallel to each other across the light source 131, the light intensity in each light reception element in the light reception arrays PA1 and PA2 is at its highest at an edge Eo, which is on the light source 131 side, and the light intensity is at its lowest at an edge En, which is on the side opposite to the light source 131 side.

In this embodiment, each light reception element is a photodiode, and outputs a detection signal of an analog value that depends on the amount of light reception on the overall light reception area of the light reception element, as described above. The amount of light reception is a sum of light intensities at light reception points in the light reception area. If the light intensity is distributed differently in each of the light reception elements, the amount of light reception differs between the light reception elements, even though the light reception elements have identical light reception areas. This may cause analog detection signals to have varied change properties in the light reception elements. This, in turn, may cause the light reception elements to have mutually different timings for change into binarization signals, creating a possibility of erroneous detection of the absolute position. In order to prevent the light reception elements from having mutually different timings for change into the binarization signals, it is possible to provide suitable thresholds for conversion into the binarization signals in accordance with the change properties of the light reception elements. This, however, may complicate the circuit configuration or complicate signal processing, causing an increase in cost, for example.
It is also possible to optimize the external dimensions of the light reception elements in the measurement direction $C$ and in the width direction $R$ so as to vary the light reception areas and thus make the amounts of light reception uniform. Changing the external dimensions of the light reception elements in the measurement direction *C*, however, may cause non-uniform intervals between two adjacent light reception elements. This, in turn, may cause a non-uniform amount of crosstalk, which is the amount of leakage of light to and from the adjacent light reception elements and which is caused under the influence of diffused reflection, for example. As a result, the amounts of light reception may become non-uniform. Changing the external dimensions of the light reception elements in the width direction R may cause light reception elements having smaller width dimensions to be more likely affected by width displacement of the reflected light caused by eccentricity of the disk 110. This may cause a possibility of detection errors.

In view of the above-described circumstances, in this embodiment, in each of the light reception array PA1 and the light reception array PA2, the light reception elements have identical maximum external dimensions in the measurement direction *C* and identical maximum external dimensions in the width direction R. Also, the light reception elements at different distances from the light source 131 have mutually different shapes so as to make the light reception elements the same in the amount of light reception. The terms "same" and "identical" as used for the external dimensions of the light reception elements and for the amounts of light reception may not necessarily be intended to mean "same" or "identical" in a strict sense, but are intended to mean "approximately same" and "approximately identical", allowing design-related and production-related tolerance and error to occur. Also as used herein, the "amount of light reception" means the maximum amount of reflected light that each light reception element receives on its entire light reception area.

In the above-described concentric light intensity distribution, the light reception elements offset from the light source 131 in the measurement direction *C* (for example, in the light reception array PA2, the light reception elements P1 to P4 and P6 to P9, excluding P5) each have such a light intensity that is higher at a first portion of each light reception element closer to the light source 131 than the center of each light reception element in the measurement direction *C* is to the light source 131, and that is lower at a second portion of the light reception element that is on the opposite side of the first portion and that is farther from the light source 131 than the center of the light reception element in the measurement direction *C* is to the light source 131. With this configuration, if the light reception elements in the offset arrangement have symmetrical shapes in the measurement direction *C*, the amount of light reception in each light reception element may become imbalanced in the measurement direction *C*. This imbalance causes a varied light amount profile depending on whether the measurement direction *C* is one direction (when the motor M rotates in a normal direction, for example) or the other direction (when the motor M rotates in a reverse direction, for example). Thus, there is a possibility of an detection error of the absolute position depending on the measurement direction.

In view of this, in this embodiment, in each of the light reception array PA1 and the light reception array PA2, the light reception elements offset from the light source 131 in the measurement direction *C* each have a shape asymmetrical in the measurement direction *C* so as to eliminate or minimize the imbalance in the amount of light reception.

Specifically, in this embodiment, in the light reception arrays PA1 and PA2, some or all of the plurality of light reception elements have tapered portions, as well as having shapes asymmetrical in the measurement direction *C*. There is particular no limitation to how the shapes of some or all of the plurality of light reception elements should be asymmetrical. In this embodiment, some or all of the plurality of light reception elements have asymmetrical pointed portions. Among the light reception arrays PA1 and PA2, the light reception array PA2 will be taken as an example and described in more detail. The light reception array PA1 has a similar shape to the shape of the light reception array PA2 except that the light reception array PA1 forms a symmetry with the light reception array PA2 in the width direction *R*. In view of this, the shape of the light reception array PA1 will not be elaborated here.

2-4-1. Details of Shapes of Light Reception Elements with Pointed Portions

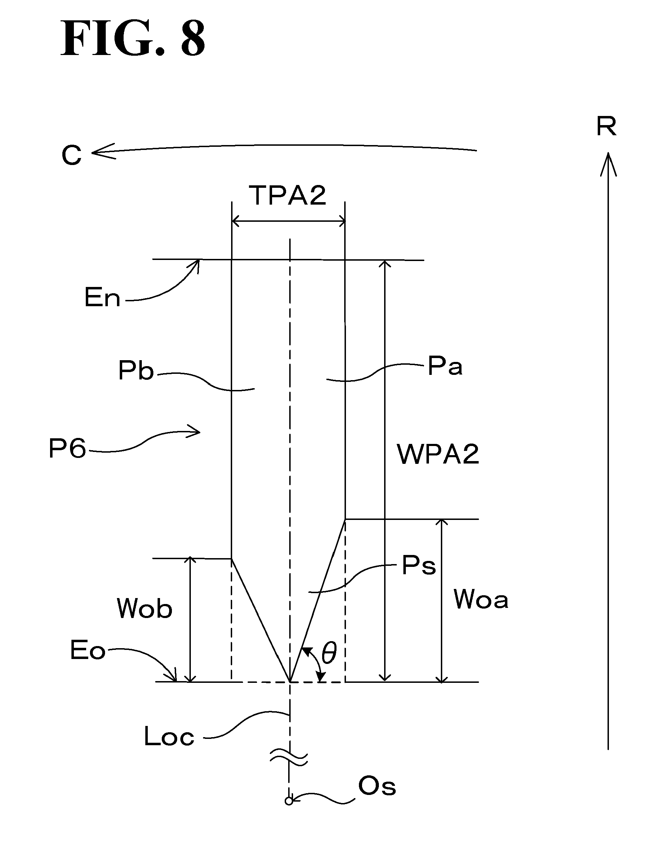

FIG. 8 is an enlarged view of an exemplary shape of the light reception element P6, which is one of the nine light reception elements of the light reception array PA2. By referring to FIG. 8, description will be made with regard to how to set the shapes and dimensions of portions of the light reception element having a pointed portion and a shape asymmetrical in the measurement direction *C*.

Schematically, the shape of the light reception element P6 is based on a quadrilateral shape with trimmed corners. The base quadrilateral shape is a rectangle having a dimension TPA2 in the measurement direction *C* (which, in this example, is a length that is ε times the minimum length *P* (basic bit length) of the reflection slit of the pattern SA2 in the measurement direction *C*) and having a dimension WPA2 in the width direction *R*. All of the light reception elements P1 to P9 of the light reception array PA2 have this base rectangular shape in common, that is, the maximum external dimension TPA2 in the measurement direction *C* and the maximum external dimension WPA2 in the width direction *R*. Two opposite sides of the base quadrilateral shape may not necessarily be parallel to each other in a strict sense, and the corners of the base quadrilateral shape may not necessarily have a right angle in a strict sense, either. That is, the base rectangular shape may be approximately quadrilateral.

As used herein, "trim", "trimming", and "trimmed" refer to an act of cutting away at least one corner of the quadrilateral shape at a predetermined inclination angle θ, or a state in which at least one corner of the quadrilateral shape is cut away at a predetermined inclination angle θ. At least one of edges En and Eo of the light reception element P6 in the width direction *R* are trimmed on two corners at different inclination angles. Thus, a pointed portion Ps is formed. The pointed portion Ps has a triangular shape with a vertex on the edge En and/or Eo or has a trapezoidal shape with one side on the edge En or Eo. In the case of the light reception element P6 illustrated in FIG. 8, at the edge Eo, which is on the light source 131 side, the corner closer to the light source 131 is trimmed at a slant over a dimension *Woa* in the width direction *R* (hereinafter referred to as "first width dimension *Woa*"), and the corner farther from the light source 131 is trimmed at a slant over a dimension *Wob* in the width direction *R* (hereinafter referred to as "second width dimension *Wob*"). The second width dimension *Wob* is shorter than the first width dimension *Woa.* Thus, the light reception area of the light reception element P6 has a relatively small portion Pa and a relatively large portion Pb. The portion Pa is closer to the light source 131 (on the right in FIG. 8) than the center of the light reception element P6 in the measurement direction *C*, which is defined by the line Loc, is to the light source 131. The other portion Pb is on the side opposite to the portion Pa (on the left in FIG. 8) and farther from the light source 131 than the center of the light reception element P6 is from the light source 131.

By this trimming, the light reception element P6 has the pointed portion Ps, which has a triangular shape a vertex on the line Loc, which passes through the centers of the edges Eo and En in the measurement direction *C* and passes through the measurement center Os. That is, the light reception element P6 has such a shape that the dimension in the width direction *R* is maximum at the center of the light reception element P6 in the measurement direction *C*. As a result, the maximum external dimension of the light reception element P6 in the width direction *R* (that is, the distance between the vertex of the pointed portion Ps and the opposite edge En) is maintained at the dimension WPA2. Thus, the light reception element P6 has a pentagonal shape that is asymmetrical about the line Loc, that is, in the measurement direction *C*.

Insofar as the pointed portion Ps has a tapered shape asymmetrical in the measurement direction *C*, the shape of the pointed portion Ps will not be limited to the above-described triangular shape. Possible examples of other shapes include a quadrilateral shape, a trapezoidal shape, and a curved arcuate shape. The pointed portion Ps may be formed by a method other than trimming the corners of the base quadrilateral shape.

Among the light reception elements, a light reception element having a larger sum "*Woa + Wob*", of the first width dimension *Woa* and the second width dimension *Wob*, has a smaller light reception area. Among the light reception elements, light reception elements having identical sums "*Woa + Wob*" have identical light reception areas.

In the following description, the light reception elements having shapes asymmetrical about the line Loc, that is, in the measurement direction *C* (namely, the light reception elements P1 to P4 and P6 to P9 in this embodiment) will be occasionally referred to as "first light reception elements". The light reception elements having shapes symmetrical about the line Loc, that is, in the measurement direction *C* (namely, the light reception element P5 in this embodiment) will be occasionally referred to as "second light reception elements".

As described above by referring to FIG. 7, among the light reception elements, a light reception element closer to the line Lo, that is, closer to the light source 131 on the substrate BA, has higher light intensity, whereas a light reception element farther from the line Lo, that is, farther from the light source 131 on the substrate BA, has lower light intensity. Specifically, the two light reception elements P1 and P9, which are at the farthest positions from the light source 131, are minimum in the sum "*Woa + Wob*". The closer the light reception elements are to the light source 131, the larger the sums *Woa + Wob* become. The light reception element P5, which is at the closest position to the light source 131, is maximum in the sum "*Woa + Wob*". That is, the shapes of the light reception elements are adjusted in such a manner that the light reception areas of the two light reception elements P1 and P9, which are at the farthest positions from the light source 131, are largest, and that the other light reception elements P2 to P8 have identical amounts of light reception as determined based on the amount of light reception at the light reception elements P1 and P9.

With this configuration, the light reception elements P1 to P9 of the light reception array PA2 have the shapes illustrated in FIGs. 5 and 7. Specifically, in order to make the light reception areas of the two outermost light reception elements P1 and P9 largest, the light reception elements P1 and P9 are each trimmed on the light-source-131 side corner on the edge Eo at a predetermined inclination angle, and not trimmed on the corners on the side opposite to the light source 131 side (that is, the second width dimension *Wob* = 0). Thus, the light reception elements P1 and P9 are first light reception elements each having an approximately pentagonal shape asymmetrical in the measurement direction *C*. The pointed portions Ps of the light reception elements P1 and P9 each have an approximately trapezoidal shape with its upper base on the edge Eo. The two light reception elements P2 and P8, which are respectively on the inner side of and immediately next to the light reception elements P1 and P9, are each trimmed on both corners on the edge Eo at predetermined inclination angles different from each other. Thus, the light reception elements P2 and P8 are first light reception elements each having an approximately pentagonal shape asymmetrical in the measurement direction *C*. The light reception elements P2 and P8 each have a larger sum "Woa + Wob" than the sum "Woa + Wob" in the light reception elements P1 and P9. The two light reception elements P3 and P7, which are respectively on the inner side of and immediately next to the light reception elements P2 and P8, are each trimmed on both corners on the edge Eo at predetermined inclination angles different from each other. Thus, the light reception elements P3 and P7 are first light reception elements each having an approximately pentagonal shape asymmetrical in the measurement direction C. The light reception elements P3 and P7 each have a larger sum "Woa + Wob" than the sum "Woa + Wob" in the light reception elements P2 and P8. The two light reception elements P4 and P6, which are respectively on the inner side of and immediately next to the light reception elements P3 and P7, are each trimmed on both corners on the edge Eo at predetermined inclination angles different from each other. Thus, the light reception elements P4 and P6 are first light reception elements each having an approximately pentagonal shape asymmetrical in the measurement direction C. The light reception elements P4 and P6 each have a larger sum "Woa + Wob" than the sum "Woa + Wob" in the light reception elements P3 and P7.

The light reception element P5, which is on the inner side of the light reception elements P4 and P6 and closest to the light source 131, is trimmed on both corners on the edge Eo at the same inclination angle. Thus, the light reception element P5 is a second light reception element having an approximately pentagonal shape symmetrical in the measurement direction C. The pointed portion Ps of the light reception element P5 has an approximately isosceles triangular shape symmetrical in the measurement direction C. The light reception element P5 has a larger sum "Woa + Wob" than the sum "Woa + Wob" in the light reception elements P4 and P6.

This configuration ensures that the two light reception elements P1 and P9, which are at the farthest positions from the light source 131, each have the maximum light reception area. The closer the light reception element is to the light source 131, the smaller the light reception area becomes. The light reception element P5, which is at the closest position to the light source 131, has the minimum light reception area.

In the light reception elements P1 to P4 and P6 to P9, which are offset from the light source 131 in the measurement direction C, the first width dimension Woa is larger than the second width dimension Wob. As a result, in each of the light reception elements P1 to P4 and P6 to P9, the portion Pa of the light reception area, which is on the light source 131 side, is smaller than the other portion Pb of the light reception area. In the light reception element P5, which is to the width direction R relative to the light source 131, the first width dimension Woa is equal to the second width dimension Wob, and the portion Pa, which is on the light source 131 side, and the other portion Pb have identical light reception areas.

The plurality of light reception elements P1 to P9 of the light reception array PA2 should not be limited to the above-described shapes. Another possible embodiment is that the light reception elements P1 and P9, which are at both ends of the light reception array PA2, have triangular pointed portions Ps, similarly to other light reception elements. Another possible embodiment is that the pointed portions Ps of the light reception elements P1 to P9 are each formed on the edge En, which is on the side opposite to the light source 131 side, or that the pointed portions Ps are each formed on the edge Eo, which is on the light source 131 side, and on the edge En, which is on the opposite side. Another possible embodiment is that a plurality of light reception elements among the light reception elements P1 to P9 have identical light reception areas, or that all the light reception elements P1 to P9 have identical light reception areas. Another possible embodiment is that the light reception elements P1 to P9 are each made up of the pointed portion Ps alone. While various other shapes are contemplated, the light reception elements in this embodiment have the above-described shapes for convenience of description.

The configuration described so far ensures that the light reception array PA1 and the light reception array PA2, the light reception elements have identical maximum external dimensions in the measurement direction C and identical maximum external dimensions in the width direction R, while at the same time the light reception elements have the same amounts of light reception. The configuration also eliminates or minimizes the imbalance, in the measurement direction C, in the amount of the received light in each light reception element. This, in turn, eliminates or minimizes erroneous detection of the absolute position irrespective of the measurement direction.

In this embodiment, providing the first light reception elements and the second light reception element with the respective pointed portions Ps provides additional advantageous effects in converting the detection signals into binarization signals. The additional advantageous effects will be described in detail below.

2-4-2. Effects of Pointed Portions in Binarization Signal Conversion

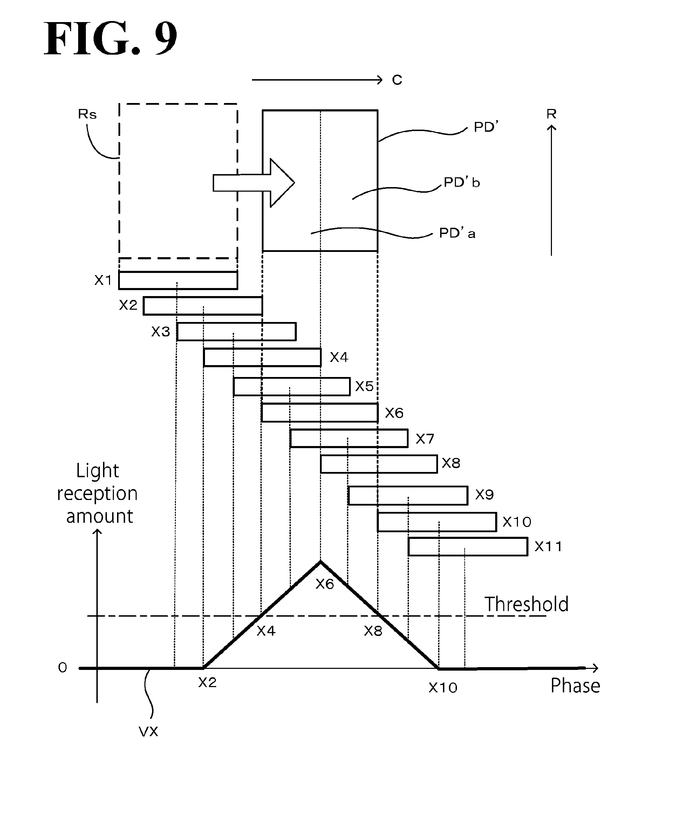

Description will be first made with regard to a comparative example by referring to FIG. 9, which illustrates a change property of an analog detection signal from a light reception element PD' according to the comparative example, which has a rectangular shape without a pointed portion Ps. Referring to FIG. 9, Rs denotes an irradiation surface of light reflected from the reflection slits of the patterns SA1 and SA2. As the disk 110 rotates, the phase of the rotation position of the disk 110 changes. In accordance with the change, the irradiation surface Rs moves relative to the rectangular light reception element PD' in the measurement direction C, passing through positions X1 to X11 in this order. Assume that the irradiation surface Rs has a rectangular shape that is larger than the light reception element PD' in the width direction R and is the same as the light reception element PD' in the measurement direction C. Also assume that the light intensity is distributed uniformly over the irradiation surface Rs. While the irradiation surface Rs is passing through positions X1 to X11, the amount of light reception in the light reception element PD' changes over time in accordance with the change property indicated by the bold line VX.

In this case, from the timing at which the irradiation surface Rs is at position X2 and starts overlapping the light reception element PD' to the timing at which the irradiation surface Rs is at position X6 and completely overlaps the light reception element PD', the amount of light reception monotonously increases in a linear function manner. At the timing at which the irradiation surface Rs is at position X6, the amount of light reception is at its maximum. In the meantime, namely, at the timing at which the irradiation surface Rs is at position X4 and overlaps a portion PD'a, which is half the light reception element PD', the amount of light reception is half the maximum amount of light reception. From the timing at which the irradiation surface Rs is at position X6 and completely overlaps the light reception element PD' to the timing at which the irradiation surface Rs is at position X10 and stops overlapping the light reception element PD', the amount of light reception monotonously decreases in a linear function manner. In the meantime, namely, at the timing at which the irradiation surface Rs is at position X8 and stops overlapping the portion PD'a, the amount of light reception is half the maximum amount of light reception.

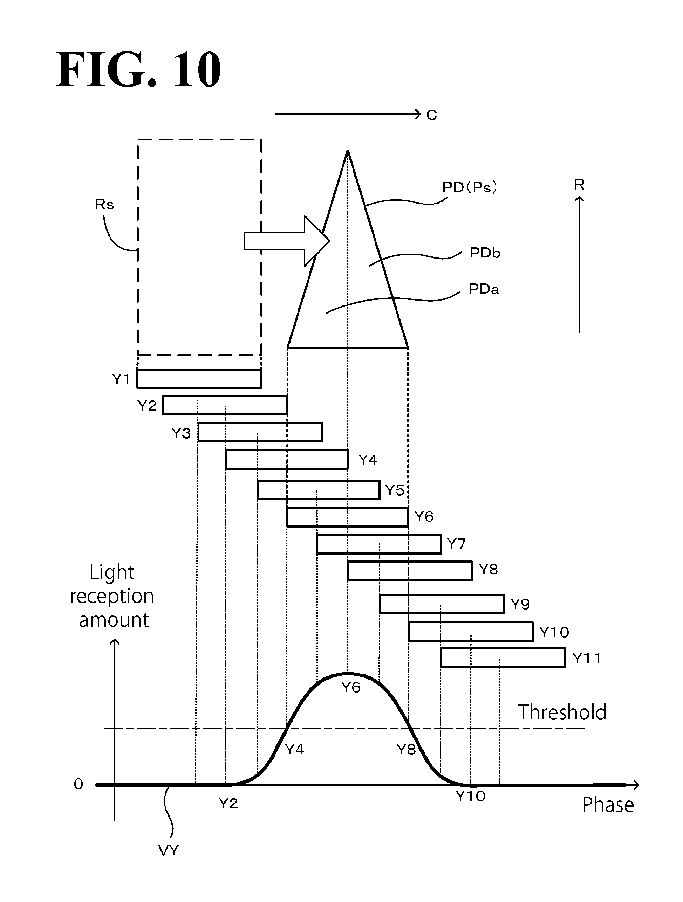

FIG. 10 illustrates a change property of an analog detection signal from a light reception element PD according to this embodiment, which has a pointed portion Ps. For ease of description, the light reception element PD illustrated in FIG. 10 is made up only of a pointed portion Ps having an isosceles triangular shape symmetrical in the measurement direction C. Similarly to the comparative example, the irradiation surface Rs has a rectangular shape that is larger than the light reception element PD in the width direction R and is the same as the light reception element PD in the measurement direction C. Also similarly to the comparative example, the light intensity is distributed uniformly over the irradiation surface Rs. As the disk 110 rotates, the phase of the rotation position of the disk 110 changes. In accordance with the change, the irradiation surface Rs moves relative to the light reception element PD, passing through positions Y1 to Y11 in this order. While the irradiation surface Rs is passing through positions Y1 to Y11, the amount of light reception in the light reception element PD changes over time in accordance with the change property indicated by the bold line VY

In this case, from the timing at which the irradiation surface Rs is at position Y2 and starts overlapping the light reception element PD to the timing at which the irradiation surface Rs is at position Y4 and overlaps a portion PDa, which is half the light reception element PD, the amount of light reception increases in a quadratic function manner (forming a downward curve). From the timing at which the irradiation surface Rs is at position Y4 to the timing at which the irradiation surface Rs is at position Y6 and overlaps the light reception element PD entirely, the amount of light reception increases in a quadratic function manner (forming an upward curve). From the timing at which the irradiation surface Rs is at position Y6 and the amount of light reception is at its maximum to the timing at which the irradiation surface Rs is at position Y8 and stops overlapping the portion PDa of the light reception element PD, the amount of light reception decreases in a quadratic function manner (forming an upward curve). From the timing at which the irradiation surface Rs is at position Y8 to the timing at which the irradiation surface Rs is at position Y10 and stops overlapping a portion PDb, which is the other half of the light reception element PD (that is, when the irradiation surface Rs stops overlapping the light reception element PD), the amount of light reception decreases in a quadratic function manner (forming a downward curve). That is, the amount of light reception is represented by such a characteristic curve that has inflection points at the timings at which the irradiation surface Rs is at positions Y4 and Y8 and overlaps the halves of the light reception element PD. At these timings, the amount of light reception has the highest rate of change per time (that is, the curve is steepest at these timings).

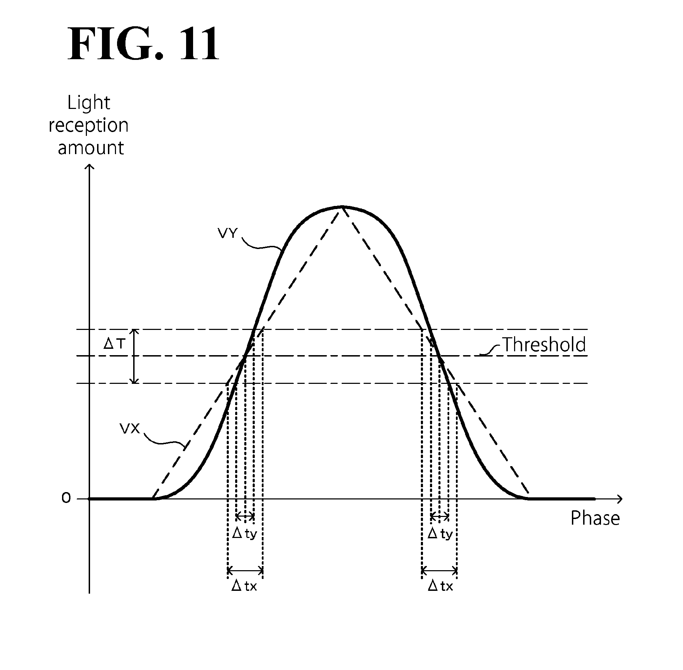

By referring to FIG. 11, the change property of the amount of light received by the light reception element PD' will be compared with the change property of the amount of light received by the light reception element PD. To clarify the comparison, FIG. 11 will be under the assumption that the light reception element PD' and the light reception element PD have identical light reception areas, are irradiated with a uniform distribution of light having the same intensity, and have the same maximum amounts of light reception in the respective change properties.

As illustrated in FIG. 11, in both the light reception elements PD' and PD, the timing at which the amount of light reception is half the maximum amount of light reception is the timing at which half of the light reception area of each light reception element overlaps the irradiation surface Rs, namely, the timings represented by positions X4 and X8 in FIG. 9 and Y4 and Y8 in FIG. 10. At these timings, the characteristic curves VX and VY intersect each other. Preferably, the threshold for converting analog detection signals from the light reception elements into binarization signals is set at a value that is half the maximum amount of light reception. The threshold, however, may change relative to the change property of the amount of light reception due to a change in the intensity of irradiation light caused by deterioration over time of the light source 131 or a production-related individual difference that the light source 131 has, or due to a change in the light reception sensitivity caused by deterioration over time of the light reception elements or a production-related individual difference that each light reception element has. The threshold changes within a range of fluctuation $\Delta T$, which is based on a reference value that is half of the maximum amount of light reception. In the case of the light reception element PD', however, since the change property increases and decreases in a linear function manner, the timing of change into a binarization signal changes within a corresponding fluctuation range $\Delta tx$.

In contrast, in the case of the light reception element PD, the characteristic curve has inflection points at the timings of the reference value that is half of the maximum amount of light reception, as described above. In the vicinity of the inflection points, the curve exhibits sharp inclinations. This configuration keeps the fluctuation of the change timing of the binarization signal within a fluctuation range $\Delta ty$ with respect to the fluctuation range $\Delta T$ of the threshold. The fluctuation range $\Delta ty$ is much narrower than the fluctuation range $\Delta tx$, which is the case of the light reception element PD'. Thus, by forming the light reception elements into such shapes that include the pointed portions Ps, the influence of the threshold change is eliminated or minimized during the conversion of the analog detection signals into the binarization signals.

2-4-3. Advantageous Effects of asymmetrical shapes of Light Reception Elements

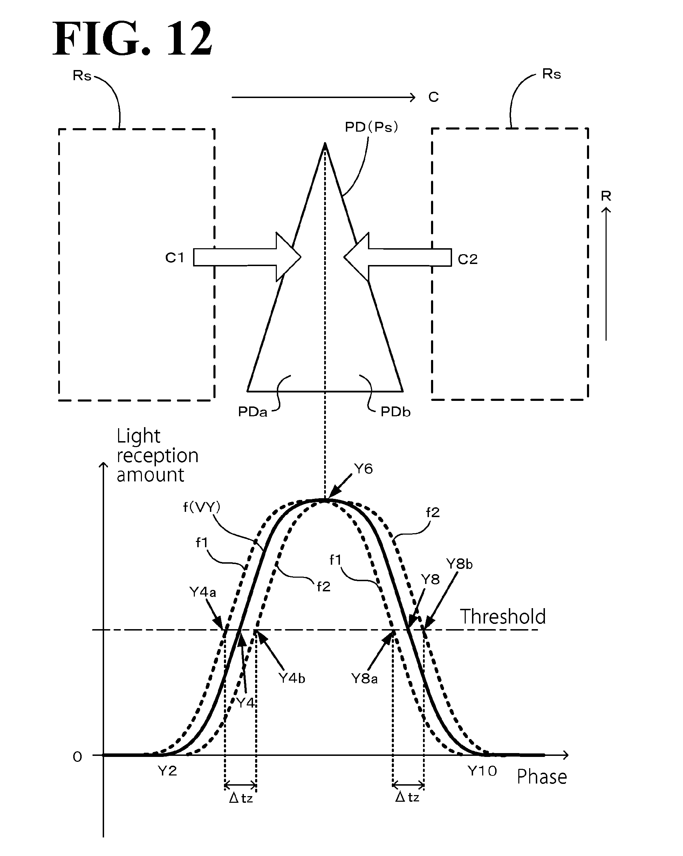

Next, advantageous effects of using the light reception elements each having a shape asymmetrical in the measurement direction $C$ will be described with reference to FIG. 12. In FIG. 12 as well, the light reception element PD is made up of the triangular pointed portion Ps alone, for ease of description.

As described above, the intensity of light emitted from the light source 131 exhibits a concentric distribution around the light source 131, that is, the intensity attenuates as the distance from the light source 131 increases. Hence, when the light reception element PD is offset from the light source 131 in the measurement direction $C$ (for example, in the case of the light reception elements P1 to P4 and P6 to P9), the intensity of the light received by the light reception element PD on average is relatively high in the portion PDa, which is closer to the light source 131, than the center of the light reception element PD in the measurement direction $C$, and the intensity of the light received by the light reception element PD is relatively low in the portion PDb, which is on the side opposite to the light source 131 side. Therefore, when the light reception element PD has an isosceles triangular shape symmetrical in the measurement direction $C$, the portion PDa has the same area as the area of the portion PDb. Accordingly, the amount of light reception in the portion PDa is larger than the amount of light reception in the portion PDb. This causes an imbalance in the amount of light reception in the measurement direction $C$.

Specifically, when the measurement direction $C$ is direction $C1$, the rate of increase/decrease of the amount of light reception is relatively high in the portion PDa, which is on the light source 131 side, and the rate of increase/decrease of the amount of light reception is relatively low in the portion PDb, which is on the side opposite to the light source 131 side. As a result, the amount of light reception of the light reception element PD has such a profile that a characteristic curve f (which represents the characteristic line VY) changes to a characteristic curve f1. In the characteristic curve f, the amount of light reception is maximum in the phase represented by position Y6, and the amount of light reception is half the maximum in the phases represented by position Y4 and position Y8. In the characteristic curve f1, the phase in which the amount of light reception is half the maximum is displaced from position Y4 (Y8) to position Y4a (Y8a).

When the measurement direction $C$ is direction $C2$, the rate of increase/decrease of the amount of light reception is relatively low in the portion PDb, and the rate of increase/decrease of the amount of light reception is relatively high in the portion PDa. Therefore, the amount of light reception of the light reception element PD has such a profile that the characteristic curve f changes to a characteristic curve f2. In the characteristic curve f2, the phase in which the amount of light reception is half the maximum is displaced from position Y4 (Y8) to position Y4b (Y8b).

It is noted that when the light reception element PD is on the line Lo, which passes through the light source 131, that is, at a position not offset from the light source 131 in the measurement direction $C$ (for example, the light reception element P5), the intensity of the light received by the portion PDa is the same as the intensity of the light received by the portion PDb. Therefore, even though the light reception element PD has an isosceles triangular shape symmetrical in the measurement direction $C$, there is no deviation of phase in the profile of the amount of light reception irrespective of whether the measurement direction $C$ is direction $C1$ or direction $C2$. As a result, the light reception element PD has the light amount profile represented by the characteristic curve f.

As described above, when the light reception element PD offset from the light source 131 in the measurement direction $C$ has a shape symmetrical in the measurement direction $C$, there is a possibility of the characteristic curve of the amount of light reception (light amount profile) changing depending on the measurement direction. This may cause a detection error $\Delta tz$ in the absolute position.

In contrast, in this embodiment, the light reception element PD offset from the light source 131 in the measurement direction $C$ (for example, the light reception elements P1 to P4 and P6 to P9) has a shape asymmetrical in the measurement direction $C$. Specifically, as described above, the portion PDa, which is on the light source 131 side, of the light reception element PD has a relatively small light reception area, and the portion PDb, which is on the side opposite to the light source 131 side, has a relatively large light reception area. This ensures that the portion PDa has the same amount of light reception as the amount of light reception of the portion PDb, thus minimizing the imbalance of the amount of light reception in the measurement direction $C$. As a result, when the measurement direction $C$ is the direction $C1$, the rate of increase/decrease of the amount of light reception in the portion PDa is lowered, and the rate of increase/decrease of the amount of light reception in the portion PDb is increased. When the measurement direction $C$ is the direction $C2$, the rate of increase/decrease of the amount of light reception in the portion PDb is increased, and the rate of increase/decrease of the amount of light reception in the portion PDa is lowered. This configuration minimizes the phase deviation in the light amount profile of the amount of light reception of the light reception element PD irrespective to the measurement direction, and makes the light amount profile close to the characteristic curve f.

3. Advantageous Effects of this Embodiment

As has been described heretofore, in this embodiment, the encoder 100 includes the patterns SA1 and SA2, the light source 131, and the plurality of light reception elements P1 to P9. The patterns SA1 and SA2 are disposed in the measurement direction $C$. The light source 131 emits light to the patterns SA1 and SA2. The plurality of light reception elements P1 to P9 are disposed in the measurement direction $C$ and receive the light emitted from the light source 131 and reflected by the patterns SA1 and SA2. The plurality of light reception elements P1 to P9 include the first light reception elements P1 to P4 and P6 to P9. Each of the first light reception elements P1 to P4 and P6 to P9 has a shape asymmetrical in the measurement direction $C$. This configuration provides the following advantageous effects.

Since light attenuates in proportion to its optical path length, the intensity of the light emitted from the light source 131 exhibits a concentric distribution around the light source 131, that is, the intensity attenuates as the distance from the light source 131 increases. Hence, depending on the arrangement of the light source 131 in relation to the plurality of light reception elements, the light intensity in the light reception element may become imbalanced in the measurement direction $C$. In this case, when the light reception element has a shape symmetrical in the measurement direction $C$, the amount of light reception may become imbalanced in the measurement direction $C$. The imbalance may cause the light amount profile to change depending on whether the measurement direction $C$ one direction or the other direction. This, in turn, may cause erroneous detection of the absolute position depending on the measurement direction $C$.

In this embodiment, the first light reception elements P1 to P4 and P6 to P9 each have a shape asymmetrical in the measurement direction $C$. This configuration prevents the amount of light reception in each first light reception element from becoming imbalanced in the measurement direction $C$. This, in turn, eliminates or minimizes erroneous detection of the absolute position irrespective of the measurement direction $C$, thereby improving detection accuracy.

In this embodiment, arranging the first light reception elements P1 to P4 and P6 to P9 at positions offset from the light source 131 in the measurement direction $C$ provide the following advantageous effects.

If the light reception elements offset from the light source 131 in the measurement direction $C$ have shapes symmetrical in the measurement direction $C$, the amount of light reception may become imbalanced in the measurement direction $C$ due to the concentric nature of distribution of the light intensity. In view of this, the use of the first light reception elements P1 to P4 and P6 to P9, which have shapes asymmetrical in the measurement direction $C$, minimizes the imbalance, in the measurement direction $C$, in the amount of the received light in each of the first light reception elements P1 to P4 and P6 to P9.

In this embodiment, the first light reception elements P1 to P4 and P6 to P9 each have a first portion and a second portion. The first portion is closer to the light source 131 than the center of the first light reception element in the measurement direction $C$ is to the light source 131. The first portion is smaller in area than the second portion. This configuration provides the following advantageous effects.

If the light reception elements P1 to P4 and P6 to P9, which are at the positions offset from the light source 131 in the measurement direction $C$, should have shapes symmetrical in the measurement direction $C$, the amount of light reception in the first portion, which is closer to the light source 131 than the center of the light reception element in the measurement direction $C$ is to the light source 131, would become larger than the amount of light reception in the second portion due to the concentric nature of distribution of the light intensity. In view of this, in the first light reception elements P1 to P4 and P6 to P9, the first portion, which is closer to the light source 131 than the center of the light reception element in the measurement direction $C$ is to the light source 131, is smaller in area than the second portion. This configuration minimizes the imbalance, in the measurement direction $C$, in the amount of the received light in each of the first light reception elements P1 to P4 and P6 to P9.

In this embodiment, the plurality of light reception elements P1 to P9 include the second light reception element P5. The second light reception element P5 is arranged in the width direction $R$ with respect to the light source 131 and has a shape symmetrical in the measurement direction $C$. This configuration provides the following advantageous effects.

Due to the concentric nature of distribution of the light intensity, the second light reception element P5, which is arranged in the width direction $R$ with respect to the light source 131, exhibits no or minimal imbalance in the amount of light reception in the measurement direction $C$. Therefore, the use of the second light reception element P5, which has a shape symmetrical in the measurement direction $C$, ensures a balance in the amount of light reception in the measurement direction $C$.

In this embodiment, the first light reception elements P1 to P4 and P6 to P9 and the second light reception element P5 each have such a shape that the dimension in the width direction $R$ is maximum at the center of the light reception element in the measurement direction $C$. This configuration provides the following advantageous effects.

This shape of each of the first light reception elements P1 to P4 and P6 to P9 and the second light reception element P ensures an increased rate (that is, a steeper inclination) of change in signal output in the vicinity of the threshold (which is half the maximum value of the amount of light reception) at the time when the irradiation surface Rs of the pattern passes through the light reception element. This configuration minimizes phase deviation with respect to the change of the threshold, thereby preventing erroneous detection of the absolute position even if the threshold changes.

In this embodiment, among the plurality of light reception elements P1 to P9, those light reception elements disposed at different distances from the light source 131 have mutually different shapes in such a manner that those light reception elements are the same in the amount of light reception. This configuration provides the following advantageous effects.

Since this configuration uniformizes the amounts of light received by the light reception elements P1 to P9, detection accuracy is uniformized on a one-bit basis. This, in turn, eliminates or minimizes erroneous detection of the absolute position, thereby improving detection accuracy. The above configuration also eliminates the need for processing for adjusting the signal output of the light reception elements P1 to P9. The above configuration also ensures use of a common threshold among the light reception elements P1 to P9 in the conversion of the analog signals from the light reception elements P1 to P9 into binarization signals. This simplifies the circuit configuration.

In this embodiment, the plurality of light reception elements P1 to P9 have identical maximum external dimensions, TPA2, in the measurement direction $C$, and the plurality of light reception elements P1 to P9 have identical maximum external dimensions, WPA2, in the width direction $R$. This configuration provides the following advantageous effects.

By equalizing the maximum external dimensions, TPA2, of the light reception elements P1 to P9 in the measurement direction $C$, the intervals between the light reception elements P1 to P9 in the measurement direction $C$ are approximately uniformized. This configuration uniformizes the amount of crosstalk between adjacent light reception elements in the measurement direction $C$, thereby further improving uniformity of the amounts of light received by the light reception elements P1 to P9. This configuration also facilitates processing for removing crosstalk noise from the signals of the light reception elements P1 to P9.

If the dimension of a light reception element in the width direction $R$ should be decreased as the distance to the light source 131 decreases, the light reception element having a smaller dimension in the width direction $R$ would be more likely affected by a position deviation of light in the width direction $R$ cause by eccentricity of the disk 110. This may make erroneous detection more likely to occur. In view of this, the maximum external dimensions WPA2 of the light reception elements P1 to P9 in the width direction $R$ are equal to each other. This configuration eliminates or minimizes the influence that the eccentricity of the disk 110 has. This, in turn, eliminates or minimizes erroneous detection of the absolute position even though the disk 110 has eccentricity.

In this embodiment, one set of light reception elements constituting the light reception array PA1 and another set of the light reception elements constituting the light reception array PA2 are parallel to each other and offset from each other across the light source 131 in the width direction $R$, which is perpendicular to the measurement direction $C$. This configuration provides the following advantageous effects. It is possible for one of the two sets of the plurality of light reception elements (light reception array PA2, for example) to be a change point of the absolute patterns. This and other situations may cause degraded reliability of the detection signals. In this case, the detection signals from the other set of the plurality of light reception elements (light reception array PA1, for example) may be used. The same applies the other way around; that is, when the light reception array PA1 is a change point of the absolute patterns, the detection signals from the other light reception array PA2 may be used. This improves the reliability of the detection signals from the light reception elements, thereby improving detection accuracy of the absolute position.

In this embodiment, the encoder 100 is a reflection encoder in which the light source 131 is a point light source to emit diffused light to the patterns SA1 and SA2. The patterns SA1 and SA2 reflect the light emitted from the light source 131, and the plurality of light reception elements of the light reception arrays PA1 and PA2 receive the light reflected by the patterns SA1 and SA2. This configuration provides the following advantageous effects.

In the reflection encoder, use of a point light source to emit diffused light makes the distribution of the amount of the reflected light from each of the patterns SA1 and SA2 more likely to form a trapezoidal shape that expands beyond the irradiation area corresponding to the patterns SA1 and SA2. This may readily induce crosstalk between the light reception elements that are adjacent to each other in the measurement direction *C*. In view of this, this embodiment uniformizes the amount of crosstalk between adjacent light reception elements, and this configuration is effective when applied to reflection encoders. Additionally, use of a reflection encoder reduces the size of the encoder 100 in that the plurality of light reception elements P1 to P9 of the light reception arrays PA1 and PA2 can be arranged closer to the light source 131.

4. Modifications

Embodiments have been described in detail hereinbefore with reference to the accompanying drawings. Obviously, numerous modifications and variations of the present disclosure are possible in light of the above teachings. It is therefore to be understood that within the scope of the appended claims, the present disclosure may be practiced otherwise than as specifically described herein. Modifications will now be described, wherein like reference numerals designate corresponding or identical elements throughout the embodiments and the modifications.

4-1. The Case where Pointed Portions are Formed on Edge on Opposite Side to Light Source Side

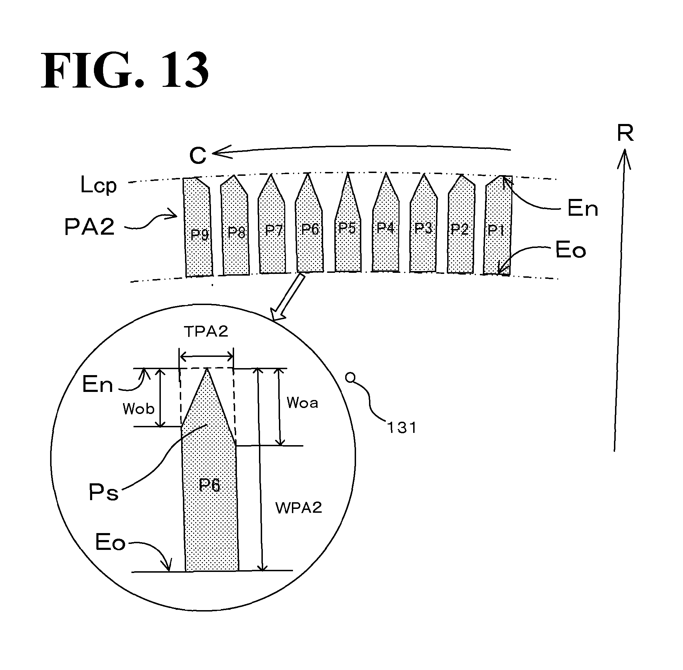

In the above-described embodiment, the pointed portion Ps is formed on the edge of each light reception element on the light source 131 side. The pointed portion Ps, however, may be formed on the edge on the side opposite to the light source 131 side. One example of this modification is illustrated in FIG. 13.

In the modification, as illustrated in FIG. 13, in the light reception array PA2, each of the light reception elements P1 to P9 includes a pointed portion Ps on the edge of each light reception element on the side opposite to the light source 131 side in the width direction *R*, as opposed to the above-described embodiment. The light reception elements of the light reception array PA1 have similar configurations, not illustrated. Each of the light reception elements P1 to P9 is otherwise similar to the above-described embodiment.

This modification provides similar advantageous effects to the advantageous effects provided in the above-described embodiment.

4-2. The Case where the Plurality of Light Reception Elements have identical light reception areas

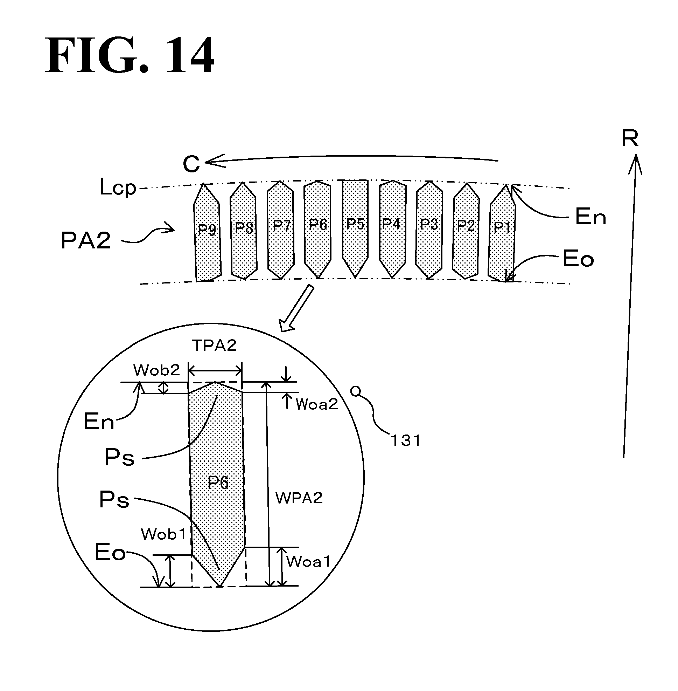

In the above-described embodiment, among the plurality of light reception elements P1 to P9, a light reception element closer to the light source 131 has a smaller light reception area, that is, light reception elements disposed at different distances from the light source 131 have mutually different light reception areas. This configuration, however, should not be construed in a limiting sense. Another possible embodiment is that all or some of the light reception elements P1 to P9 have identical light reception areas. An exemplary case where all of the light reception elements P1 to P9 have identical light reception areas is illustrated in FIG. 14.

As illustrated in FIG. 14, in each of the light reception elements of the light reception array PA2, assume that a first width dimension of a pointed portion Ps on the edge Eo side is *Woa1*, a second width dimension of the pointed portion Ps on the edge Eo side is *Wob1*, a first width dimension of a pointed portion Ps on the edge En side is *Woa2*, and a second width dimension of the pointed portion Ps on the edge En side is *Wob2*. In this modification, the plurality of light reception elements P1 to P9 are the same in the sum "*Woa1 + Woa2 + Wob1 + Wob2*" of the first width dimensions *Woa1* and *Woa2* and the second width dimensions *Wob1* and *Wob2*. That is, all of the light reception elements P1 to P9 have identical light reception areas.

In this example, in the outermost light reception elements P1 and P9, the second width dimension *Wob1* of the pointed portion Ps on the edge Eo side is 0. In the center light reception element P5, the first width dimension *Woa2* and the second width dimension *Wob2* of the pointed portion Ps on the edge En side are 0.

As described above with reference to FIG. 7, the light intensity in each light reception element is highest at the edge Eo, which is on the light source 131 side, and is lowest at the edge En, which is on the side opposite to the light source 131 side. Hence, even though the light reception elements are the same in the sum "*Woa1 + Woa2 + Wob1 + Wob2*", that is, identical light reception areas, if the ratio of the width dimensions "*Woa1 + Wob1*" of the pointed portion Ps on the edge Eo side, which is closer to the light source 131, is made larger with respect to the sum "*Woa1 + Woa2 + Wob1 + Wob2*", the amount of light reception is made relatively low. On the contrary, if the ratio of the width dimensions "*Woa2 + Wob2*" of the pointed portion Ps on the edge En side, which is farther from the light source 131, is made larger with respect to the sum "*Woa1 + Woa2 + Wob1 + Wob2*", the amount of light reception is made relatively high.

Among the light reception elements P1 to P9 having the same area, a light reception element closer to the light source 131 in the measurement direction C has a larger ratio of the width dimensions "*Woa1 + Wob1*" of the pointed portion Ps on the edge Eo side with respect to the sum "*Woa1 + Woa2 + Wob1 + Wob2*" (hereinafter occasionally referred to as "*Wo1* ratio"). Specifically, the *Wo1* ratio of the light reception element P5 (100% in this example) is larger than the *Wo1* ratio of each of the light reception elements P4 and P6. The *Wo1* ratio of each of the light reception elements P4 and P6 is larger than the *Wo1* ratio of each of the light reception elements P3 and P7. The *Wo1* ratio of each of the light reception elements P3 and P7 is larger than the *Wo1* ratio of each of the light reception elements P2 and P8. The *Wo1* ratio of each of the light reception elements P2 and P8 is larger than the *Wo1* ratio of each of the light reception elements P1 and P9.

The above-described shapes ensure that the light reception elements P1 to P9 have identical light reception areas, and at the same time, are the same in the amount of light reception.

In the pointed portions Ps of the light reception elements P1 to P4 and P6 to P9 on the edge Eo side, the first width dimension *Woa1* is longer than the second width dimension *Wob1* (it is noted that, in the outermost light reception elements P1 and P9, the second width dimension *Wob1* of the pointed portion Ps on the edge Eo side is 0). The pointed portion Ps of the light reception element P5 on the edge Eo side has an equal first width dimension *Woa1* to the second width dimension *Wob1*. The pointed portions Ps of the light reception elements P1 to P4 and P6 to P9 on the edge En side each have an equal first width dimension *Woa2* to the second width dimension *Wob2*. It is noted, however, that the pointed portions Ps on the edge En side each may have a different first width dimension *Woa2* from the second width dimension *Wob2*.

In the above-described shapes, the light reception elements P1 to P4 and P6 to P9 each have a first portion and a second portion. The first portion is closer to the light source 131 than the center of the light reception element in the measurement direction *C* is to the light source 131, and has a smaller light reception area than the second portion.

This modification is otherwise similar to the above-described embodiment. For example, the light reception elements have identical maximum external dimensions, TPA2, in the measurement direction *C* and have identical maximum external dimensions, WPA2, in the width direction *R*. The light reception elements of the light reception array PA1 have similar configurations, not illustrated.

This modification also provides similar advantageous effects to the advantageous effects provided in the above-described embodiment.

4-3. The Case where Portions of Light Reception Element on Both Sides of Measurement Direction have Identical Light Reception Areas

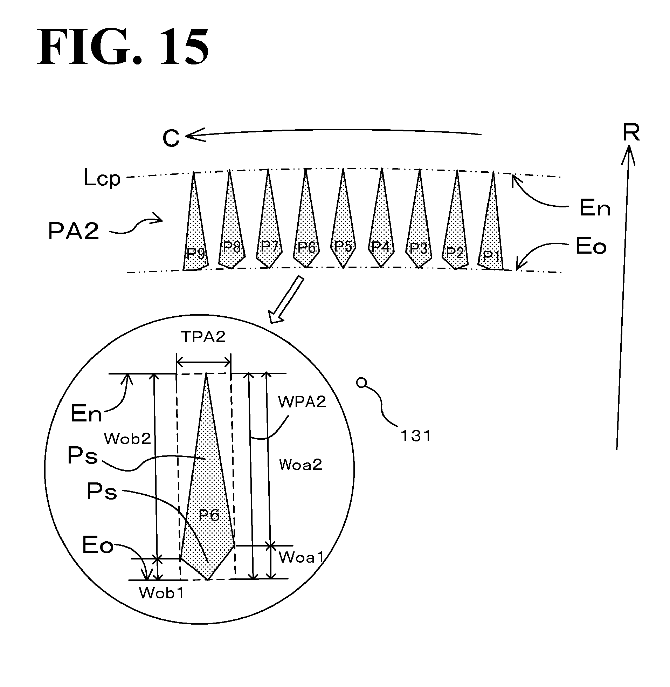

FIG. 15 illustrates an example of this modification. As illustrated in FIG. 15, the plurality of light reception elements P1 to P9 of the light reception array PA2 are each made up only of a pointed portion Ps. The pointed portion Ps has vertexes or one side on both edges Eo and En in the width direction *R*. This modification is similar to the modification (4-2) in that the plurality of light reception elements P1 to P9 are the same in the sum *"Woa1 + Woa2 + Wob1 + Wob2"* of first width dimensions *Woa1* and *Woa2* and second width dimensions *Wob1* and *Wob2*. In other words, all of the light reception elements P1 to P9 have identical light reception areas.

Among the light reception elements P1 to P9 having the same area, a light reception element closer to the light source 131 in the measurement direction *C* has a larger *Wo1* ratio. Thus, while the light reception elements P1 to P9 have identical light reception areas, the light reception elements P1 to P9 are the same in the amount of light reception.

In each of the light reception elements P1 to P4 and P6 to P9, the first portion, which is closer to the light source 131 than the center of the light reception element in the measurement direction *C* is to the light source 131, has an identical light reception area to the identical light reception area of the second portion of the light reception element. It is noted, however, that the first width dimension *Woa1* is longer than the second width dimension *Wob1*. In other words, the vertex of the triangular shape closer to the light source than the center of the light reception element in the measurement direction *C* is to the light source is farther from the light source 131 than the vertex of the other triangular shape is from the light source 131. Therefore, in each of the light reception elements P1 to P4 and P6 to P9, the portion closer to the light source 131 than the center of the light reception element in the measurement direction *C* is to the light source 131 is the same as the other portion in the amount of light reception due to the concentric nature of distribution of the light intensity.

This modification is otherwise similar to the above-described embodiment. For example, the light reception elements have identical maximum external dimensions, TPA2, in the measurement direction *C* and have identical maximum external dimensions, WPA2, in the width direction *R*. The light reception elements of the light reception array PA1 have similar configurations, not illustrated.

This modification provides similar advantageous effects to the advantageous effects provided in the above-described embodiment.

4-4. Other Exemplary Shapes of Light Reception Elements Asymmetrical in Measurement Direction

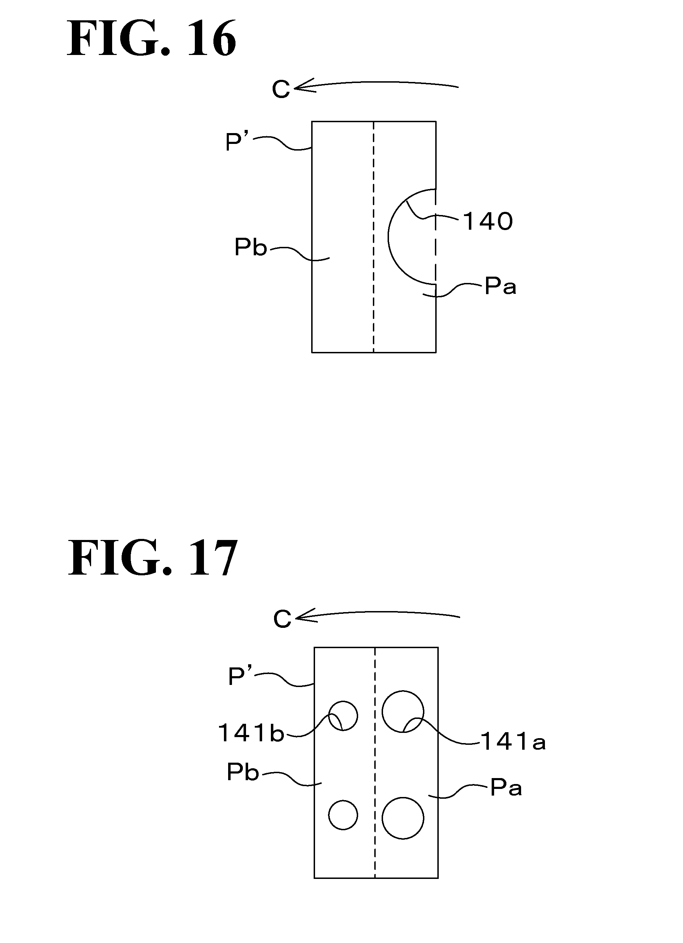

In the above-described embodiment, the edge of a light reception element in the width direction *R* is pointed to form a triangular or trapezoidal shape, and the pointed portion, Ps, has a first width dimension and a second width dimension different from the first width dimension. The shape of a light reception element asymmetrical in the measurement direction *C*, however, may have various other possibilities. FIGs. 16 to 19 illustrate other exemplary shapes asymmetrical in the measurement direction. In each example, the dimension of the light reception element in the width direction *R* is preferably maximum at the center of the light reception element in the measurement direction *C*.

For example, a light reception element P' illustrated in FIG. 16 implements a shape asymmetrical in the measurement direction *C* by forming a semicircular cut-away portion 140 in a portion Pa, which is closer to the light source 131 than the center of the light reception element in the measurement direction *C* is to the light source 131. Thus, the portion Pa of the light reception element P' on the light source 131 side has a smaller light reception area than the light reception area of the other portion Pb. It is noted that the cut-away portion 140 should not be limited to a semicircular shape but may have any desired shape such as a rectangular shape and a triangular shape. The number of cut-away portions should not be limited to one but may be two or more.

Another exemplary light reception element P' illustrated in FIG. 17 implements a shape asymmetrical in the measurement direction *C* by forming a plurality of (two in this example) cut-away holes 141a and a plurality of (two in this example) cut-away holes 141b. The cut-away holes 141a each have a large diameter in a portion Pa, which is closer to the light source 131 than the center of the light reception element in the measurement direction *C* is to the light source 131. The cut-away holes 141b each have a small diameter in the other portion Pb. Thus, the portion Pa of the light reception element P' on the light source 131 side has a smaller light reception area than the light reception area of the other portion Pb. It is noted that the cut-away holes 141 should not be limited to a circular shape but may have any desired shape such as a rectangular shape and a triangular shape. The number of the cut-away holes may be other than two (one or three or more). Still another possible asymmetrical shape in the measurement direction *C* of the light reception element P' is implemented by making same-diameter cut-away holes and making a different number of cut-away holes in the portion Pa and a different number of cut-away holes in the other portion Pb (for example, three cut-away holes in the portion Pa and two cut-away holes in the other portion Pb).

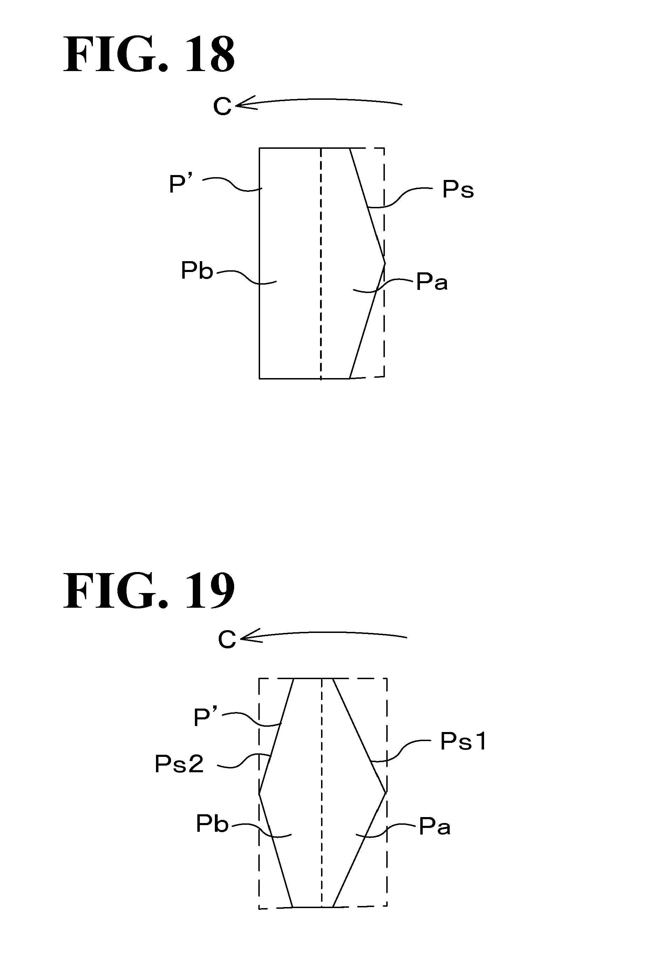

Another exemplary light reception element P' illustrated in FIG. 18 implements a shape asymmetrical in the measurement direction *C* by forming a portion Pa. The portion Pa is closer to the light source 131 than the center of the light reception element in the measurement direction *C* is to the light source 131, and has an approximately triangular pointed portion Ps on an edge of the portion Pa in the measurement direction. Thus, the portion Pa of the light reception element P' on the light source 131 side has a smaller light reception area than the light reception area of the other portion Pb. It is noted that the pointed portion Ps should not be limited to a triangular shape but may have any desired shape such as a rectangular shape and a circular shape, and that the number of pointed portions should not be limited to one.

Another exemplary light reception element P' illustrated in FIG. 19 has portions Pa and Pb. The portions Pa and Pb respectively have approximately triangular pointed portions Ps1 and Ps2 on both edges of the light reception element P' in the measurement direction. The light reception element P' implements a shape asymmetrical in the measurement direction *C* by making the pointed portion Ps1 longer in dimension (height) in the measurement direction than the pointed portion Ps2. Thus, the portion Pa of the light reception element P' on the light source 131 side has a smaller light reception area than the light reception area of the other portion Pb. It is noted that the pointed portions Ps1 and Ps2 should not be limited to triangular shapes but may have any desired shapes such as rectangular shapes and circular shapes, and that the number of the pointed portions should not be limited to one.

As used herein, the terms "perpendicular", "parallel", and "plane" may not necessarily mean "perpendicular", "parallel", and "plane", respectively, in a strict sense. Specifically, the terms "perpendicular", "parallel", and "plane" mean "approximately perpendicular", "approximately parallel", and "approximately plane", respectively, taking design-related and production-related tolerance and error into consideration.

Also, when the terms "same", "identical", "equal", and "different" are used in the context of dimensions or sizes of external appearance, these terms may not necessarily mean "same", "identical", "equal", and "different", respectively, in a strict sense. Specifically, the terms "same", "identical", "equal", and "different" mean "approximately same", "approximately identical", "approximately equal", and "approximately different", respectively, taking design-related and production-related tolerance and error into consideration.

| | |
|---|---|
| 100 | Encoder |
| 131 | Light source |
| C | Measurement direction |
| M | Motor |
| P1 to P4 | Light reception element (example of the first light reception element) |
| P6 to P9 | Light reception element (example of the first light reception element) |
| P5 | Light reception element (example of the second light reception element) |
| Pa, Pb | Portion |
| R | Width direction |
| SA1, SA2 | Pattern (example of the absolute pattern) |
| SM | Servomotor (example of the motor with encoder) |
| TPA2 | Maximum external dimension in measurement direction |
| WPA1, WPA2 | Maximum external dimension in width direction |

**Claims**

1. An encoder (100), **characterized by**:

   an absolute pattern (SA1, SA2) disposed in a measurement direction;
   a light source (131) configured to emit light to the absolute pattern (SA1, SA2); and

a plurality of light reception elements (P1 to P9) arranged in the measurement direction and configured to receive the light emitted from the light source (131) and transmitted through or reflected by the absolute pattern (SA1, SA2), the plurality of light reception elements (P1 to P9) comprising a first light reception element (P1 to P4, P6 to P9) comprising a shape asymmetrical in the measurement direction.

2. The encoder (100) according to claim 1, wherein the first light reception element (P1 to P4, P6 to P9) is offset from the light source (131) in the measurement direction.

3. The encoder (100) according to claim 2, wherein the first light reception element (P1 to P4, P6 to P9) comprises a first portion and a second portion, the first portion being closer to the light source (131) than a center of the first light reception element (P1 to P4, P6 to P9) in the measurement direction is to the light source (131), the first portion being smaller in area than the second portion.

4. The encoder (100) according to any one of claims 1 to 3, wherein the plurality of light reception elements (P1 to P9) comprise a second light reception element (P5) disposed, with respect to the light source (131), in a width direction perpendicular to the measurement direction, the second light reception element (P5) comprising a shape symmetrical in the measurement direction.

5. The encoder (100) according to claim 4, wherein the first light reception element (P1 to P4, P6 to P9) comprises a maximum dimension in the width direction at a center of the first light reception element (P1 to P4, P6 to P9) in the measurement direction, and wherein the second light reception element (P5) comprises a maximum dimension in the width direction at a center of the second light reception element (P5) in the measurement direction.

6. The encoder (100) according to any one of claims 1 to 5, wherein the plurality of light reception elements (P1 to P9) comprise a third light reception element and a fourth light reception element, the third light reception element and the fourth light reception element comprising mutually different distances from the light source (131) and comprising mutually different shapes that equalize amounts of the light received by the third light reception element and the fourth light reception element.

7. The encoder (100) according to claim 6, wherein the plurality of light reception elements (P1 to P9) comprise identical first maximum external dimensions in the measurement direction and identical second maximum external dimensions in a width direction perpendicular to the measurement direction.

8. The encoder (100) according to any one of claims 1 to 7, wherein the plurality of light reception elements (P1 to P9) comprise a first set of light reception elements (P1 to P9) and a second set of light reception elements (P1 to P9) offset from the first set of light reception elements (P1 to P9) across the light source (131) in a width direction perpendicular to the measurement direction.

9. The encoder (100) according to any one of claims 1 to 8, wherein the light source (131) comprises a point light source configured to emit diffused light to the absolute pattern (SA1, SA2), wherein the absolute pattern (SA1, SA2) comprises a pattern to reflect the diffused light emitted from the point light source (131), and wherein the plurality of light reception elements (P1 to P9) are configured to receive the light reflected by the absolute pattern (SA1, SA2).

10. A motor (M) with an encoder (100) according to any one of claims 1 to 9.

# FIG. 1

# FIG. 2

EP 3 037 787 A1

FIG. 3

EP 3 037 787 A1

# FIG. 4

EP 3 037 787 A1

# FIG. 5

EP 3 037 787 A1

# FIG. 6

EP 3 037 787 A1

FIG.7

# FIG. 8

# FIG. 9

# FIG. 10

# FIG. 11

FIG. 12

# FIG. 13

# FIG. 14

C

Lcp

PA2

R

En

Eo

P9 P8 P7 P6 P5 P4 P3 P2 P1

TPA2

Wob2

En

Ps

Ps

P6

WPA2

Wob1

Eo

Woa2

131

Woa1

# FIG. 15

# FIG. 16

C

P'

Pb

140

Pa

# FIG. 17

C

P'

141b

Pb

141a

Pa

# FIG. 18

C

P'　　　　　　Ps

Pb　　　　　　Pa

# FIG. 19

C

P'

Ps2　　　　　Ps1

Pb　　　　Pa

Europäisches
Patentamt
European
Patent Office
Office européen
des brevets

## EUROPEAN SEARCH REPORT

Application Number

EP 15 19 5524

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/205527 A1 (YOSHIDA YASUSHI [JP] ET AL) 16 August 2012 (2012-08-16)<br>* paragraphs [0106] - [0112]; figure 5 * | 1-10 | INV.<br>G01D5/347 |
| A | EP 2 639 558 A1 (YASKAWA DENKI SEISAKUSHO KK [JP]) 18 September 2013 (2013-09-18)<br>* paragraphs [0008], [0044], [0045]; figure 7 * | 1-10 | |
| A | US 2009/032691 A1 (SASAKI MASATO [JP]) 5 February 2009 (2009-02-05)<br>* paragraph [0028]; figures 1,4,5 * | 1-10 | |
| A | US 2006/043274 A1 (TOVAR HEINZ [DE]) 2 March 2006 (2006-03-02)<br>* paragraphs [0012], [0036], [0037]; figures 2-5 * | 1-10 | |

TECHNICAL FIELDS
SEARCHED (IPC)

G01D

The present search report has been drawn up for all claims

| Place of search | Date of completion of the search | Examiner |
|---|---|---|
| Munich | 13 April 2016 | Kurze, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 19 5524

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2016

| Patent document cited in search report | | Publication date | Patent family member(s) | | Publication date |
|---|---|---|---|---|---|
| US 2012205527 | A1 | 16-08-2012 | CN | 102636199 A | 15-08-2012 |
| | | | CN | 103348219 A | 09-10-2013 |
| | | | EP | 2887025 A1 | 24-06-2015 |
| | | | JP | 4816988 B1 | 16-11-2011 |
| | | | JP | 5527637 B2 | 18-06-2014 |
| | | | JP | 2012167949 A | 06-09-2012 |
| | | | KR | 20120092066 A | 20-08-2012 |
| | | | US | 2012205527 A1 | 16-08-2012 |
| | | | US | 2013306849 A1 | 21-11-2013 |
| | | | WO | 2012108078 A1 | 16-08-2012 |
| EP 2639558 | A1 | 18-09-2013 | CN | 103210284 A | 17-07-2013 |
| | | | EP | 2639558 A1 | 18-09-2013 |
| | | | JP | 4945674 B2 | 06-06-2012 |
| | | | JP | 2012103032 A | 31-05-2012 |
| | | | RU | 2013120078 A | 20-12-2014 |
| | | | US | 2013229138 A1 | 05-09-2013 |
| | | | WO | 2012063806 A1 | 18-05-2012 |
| US 2009032691 | A1 | 05-02-2009 | CN | 101393037 A | 25-03-2009 |
| | | | US | 2009032691 A1 | 05-02-2009 |
| US 2006043274 | A1 | 02-03-2006 | DE | 102004041950 A1 | 02-03-2006 |
| | | | JP | 4828165 B2 | 30-11-2011 |
| | | | JP | 2006071624 A | 16-03-2006 |
| | | | US | 2006043274 A1 | 02-03-2006 |

EPO FORM P0459

For more details about this annex : see Official Journal of the European Patent Office, No. 12/82

**REFERENCES CITED IN THE DESCRIPTION**

**Patent documents cited in the description**

- JP 4945674 B